# EUROPEAN PATENT APPLICATION

(11) **EP 1 693 234 A2**
(43) Date of publication of application: **23.08.2006**
(21) Application number: 06003019.4
(22) Date of filing: 15.02.2006
(51) Int. Cl.: B60G 17/015, B60G 21/06

(54) **Suspension apparatus**

(30) Priority: 18.02.2005 JP 2005042087
(71) Applicant: Toyota Jidosha Kabushiki Kaisha, Toyota-shi Aichi-ken, 471-8571 (JP)
(72) Inventor: Mizuta, Atsushi, Toyota-shi Aichi-ken, 471-8571 (JP); Ohashi, Hideki, Toyota-shi Aichi-ken, 471-8571 (JP); Ogawa, Kazuo, Toyota-shi Aichi-ken, 471-8571 (JP); Yasuike, Osamu, Toyota-shi Aichi-ken, 471-8571 (JP); Kimura, Yukihide, Toyota-shi Aichi-ken, 471-8571 (JP); Mizuno, Kazuyuki, Toyota-shi Aichi-ken, 471-8571 (JP); Nanahara, Masaki, Toyota-shi Aichi-ken, 471-8571 (JP); Yamasaki, Tsuyoshi, Toyota-shi Aichi-ken, 471-8571 (JP); Okimura, Kotaro, Toyota-shi Aichi-ken, 471-8571 (JP)
(74) Representative: Winter, Brandl, Fürniss, Hübner Röss, Kaiser, Polte Partnerschaft Patent- und Rechtsanwaltskanzlei

(57) **Abstract**

If the control to decrease the vehicle height is executed while a spring-constant switching valve (28FL) is closed, and the spring-constant switching valve (28FL) is opened after the control is completed, operating fluid suddenly flows from an accumulator (26FL). This causes pulsation. If the spring-constant switching valve (28FL) is opened while the communication-valve (112) is open, the operating fluid flowing from the accumulator (26FL) is supplied to a suspension cylinder (10FL) and a high-pressure accumulator (24FL) corresponding a front-left wheel (4FL), and a suspension cylinder (10FR) and a high-pressure accumulator (24FR) corresponding to a front-right wheel (4FR). As a result, the pulsation can be dispersed, and suppressed.

## Description

### BACKGROUND OF THE INVENTION

### 1. Field of the Invention

The invention relates to a suspension apparatus that includes a fluid cylinder, and at least one of a spring-constant switching device and a vehicle-height adjustment device.

### 2. Description of Related Art

Japanese Patent Application Publications No. JP-A-63-130419 and No. JP-A-63-78806 both describe a suspension apparatus that includes a hydraulic cylinder, a spring-constant switching device, and a vehicle-height adjustment device. In the suspension apparatus, when the actual vehicle height becomes the same as the vehicle height at which a spring-constant switching valve is closed, the spring-constant switching valve is opened.

### SUMMARY OF THE INVENTION

An object of the invention is to provide a suspension apparatus that suppresses the pulsation of the fluid caused by operating a spring-constant switching valve and a flow control valve.

The invention relates to a suspension apparatus that includes a fluid cylinder for a wheel of a vehicle, and at least one of a first controller and a second controller. The fluid cylinder for the wheel is provided between a wheel-holding device that holds the wheel and the vehicle body. The first controller includes (a) an accumulator connected to the fluid cylinder; and (b) an electromagnetic control valve provided between the accumulator and the fluid cylinder. The second controller includes (a) a fluid source that includes a high-pressure source and a low-pressure source; and (b) an electromagnetic control valve, provided between the fluid source and the fluid cylinder, which controls the flow of fluid between the fluid cylinder and the fluid source. The suspension apparatus further includes a third controller that suppresses the pulsation of the fluid caused by operation of the electromagnetic control valve that is included in at least one of the first controller and the second controller.

The suspension apparatus having the aforementioned configuration may include (i) the fluid cylinder and the first controller; (ii) the fluid cylinder and the second controller; or (iii) the fluid cylinder, the first controller, and the second controller. In any case, the third controller suppresses the pulsation of the fluid caused by opening or closing the electromagnetic control valve. In the case where the suspension apparatus includes (iii) the fluid cylinder, the first controller, and the second controller, the third controller may suppress one of, or both of the pulsation of the fluid caused by operation of the electromagnetic control valve included in the first controller, and the pulsation of the fluid caused by operation of the electromagnetic control valve included in the second controller. The fluid within the fluid cylinder may be liquid or air.

The suspension apparatus may include the first controller; the electromagnetic control valve included in the first controller may be a spring-constant switching valve; and the third controller may suppress the pulsation of the fluid caused by operating the spring-constant switching valve.

If the fluid pressure in the accumulator on one side of the spring-constant switching valve differs from the fluid pressure on the other side of the spring-constant switching valve (for example, the fluid pressure in the fluid cylinder) when the spring-constant switching valve is opened, the fluid may surge due to the pressure difference, which may cause the pulsation and abnormal noise. Also, the surge of the fluid between the fluid cylinder and the accumulator may also cause sudden changes in vehicle height. However, the third controller can suppress pulsations caused by opening the spring-constant switching valve, and can reduce or minimize abnormal noise. Also, the third controller can suppress any sudden change in the vehicle height. The first controller may include one accumulator connected to the fluid cylinder, or two or more accumulators connected to the fluid cylinder. The electromagnetic control valve is provided between the fluid cylinder and the at least one accumulator connected to the fluid cylinder. In other words, when a plurality of accumulators are connected to the fluid cylinder, the electromagnetic control valve may be provided for each individual accumulator, or may be provided only for selected accumulators. Further, in the case where a plurality of accumulators are connected to the fluid cylinder, the spring constants of the accumulators may be the same or different from each other. In any case, by controlling at least one spring-constant switching valve, the number of the accumulators from/into which the fluid flows into/from the fluid cylinder may be changed, or the fluid is made to flow between at least one of the accumulators having different spring constants and the fluid cylinder. This changes the theoretical spring constant of a suspension spring.

The third controller may control the spring constant of a suspension by controlling the spring-constant switching valve. For example, when the vehicle is turning, decelerating, or accelerating, the spring constant needs to be increased. In this case, the number of accumulators from/into which the fluid flows into/from the fluid cylinder is reduced, or the fluid is permitted to flow between the accumulator(s) having a great spring-constant and the fluid cylinder, by controlling at least one spring-constant switching valve. When the vehicle runs straight or runs on a rough road, the spring constant needs to be reduced. In this case, the number of the accumulators from/into which the fluid flows into/from the fluid cylinder is increased, or the fluid is permitted to flow between the accumulator(s) having a small spring-constant and the fluid cylinder, by controlling at least one spring-constant switching valve. Further, if the vehicle height is adjusted, the number of the accumulators from/into which the fluid flows into/from the fluid cylinder needs to be reduced. By reducing the amount of fluid flowing into/from the accumulators during the adjustment of the vehicle height, the time required for the actual vehicle height to reach the target vehicle height can be reduced. Accordingly, particularly when the vehicle height is adjusted quickly, the number of the accumulators from/into which the fluid flows into/from the fluid cylinder is reduced by controlling at least one spring-constant switching valve. Also, by permitting the fluid to flow between the accumulator(s) having a great spring-constant and the fluid cylinder during the adjustment of the vehicle height, the same effect can be obtained. The spring-constant switching valve can be opened and closed. The spring-constant switching valve is the electromagnetic valve that is opened by supplying electric current to a solenoid, or may be a linear control valve that can continuously change the cross sectional area through which the fluid flows.

The first controller may determine whether the pulsation will be caused by the operation of the spring-constant switching valve.

The suspension apparatus may include the second controller, and the third controller may suppress the pulsation in the case where the spring-constant switching valve is opened after the second controller adjusts the vehicle height when the spring-constant switching valve is closed.

As described above, opening the spring-constant switching valve when the fluid pressure in the accumulator on one side of the spring-constant switching valve differs from the fluid pressure on the other side of the spring-constant switching valve causes a pulsation. However, when the spring-constant switching valve is closed, little or no pulsation is caused. When the spring-constant switching valve is opened in the presence of a great pressure difference between the upstream and downstream of the spring-constant switching valve, the pulsation is caused. However, if the spring-constant switching valve is opened when there is only a small pressure difference, little or not pulsation is caused. For example, if the absolute value of the difference between the vehicle height when the spring-constant switching valve is closed and the vehicle height when a request to open the spring-constant switching valve is output is equal to or greater than a predetermined value, it can be determined that the pressure difference will be great. More specifically, for example, the pulsation is caused due to the pressure difference when the vehicle height is adjusted while the spring-constant switching valve is closed, and the spring-constant switching valve is opened after the adjustment ends. The pulsation is also caused when the spring-constant switching valve is opened after the adjustment ends, and the amount of change in the vehicle height is equal to or greater than a predetermined value. The third controller may be always operated when the spring-constant switching valve is opened, or may be operated only when it is determined that the pulsation will be caused.

The third controller may suppress the pulsation by increasing a closed region that includes the fluid cylinder and the accumulator when the spring-constant switching valve is operated.

By increasing the closed region that includes the fluid cylinder and the accumulator, the pulsation caused by the operating the spring-constant switching valve can be dispersed. Therefore, the fluid in the accumulator can be used in the closed region. For example, when the vehicle height is increased, the fluid in the accumulator can be supplied to the fluid cylinder, which suppresses the pulsation.

The fluid cylinder may further include a left fluid cylinder and a right fluid cylinder that are provided for at least one of a pair of front wheels and a pair of rear wheels; the spring-constant switching valve may include a left spring-constant switching valve that is provided between the left fluid cylinder and the corresponding accumulator, and a right spring-constant switching valve that is provided between the right fluid cylinder and the corresponding accumulator; the suspension apparatus may include a communication-valve that regulates communication between the left fluid cylinder and the right fluid cylinder; and the third controller may sequentially open the left spring-constant switching valve and the right spring-constant switching valve while the communication-valve permits communication between the left fluid cylinder and the right fluid cylinder.

When one spring-constant switching valve is opened, the closed region that includes the fluid cylinder(s) and the accumulator(s) can be increased by opening the communication-valve. As a result, the pulsation can be dispersed. For example, if the spring-constant switching valve is opened when the fluid pressure in the accumulator is higher than the fluid pressure in the fluid cylinder, the fluid flows from the accumulator to one fluid cylinder if the communication-valve is closed. However, if the communication-valve is open, the fluid flows from the accumulator to two fluid cylinders. As such, by opening the communication-valve, the pulsation can be suppressed.

The spring-constant switching valve corresponding to each of the right fluid cylinder and the left fluid cylinder may be opened individually. These spring-constant switching valves may be opened in a predetermined order. Alternatively, the spring-constant switching valve that causes greater pulsation (due to a greater pressure difference between the upstream and the downstream of the valve) may be opened later. When the communication-valve is open, the closed region can be increased by a region equivalent to the volume of the accumulator. Therefore, by opening the spring-constant switching valve that causes greater pulsation later after the closed region is increased, the pulsation can be dispersed more effectively. The communication-valve may be an electromagnetic valve that is opened by supplying electric current to a solenoid or a linear control valve that can continuously change the cross sectional area through which the fluid flows.

The fluid cylinder may be provided for each of a front-left wheel, a front-right wheel, a rear-left wheel, and a rear-right wheel; the spring-constant switching valve may be provided between each of the fluid cylinders and the corresponding accumulator; the suspension apparatus may include a center cylinder that is operated based on the relation among the fluid pressures in the fluid cylinders corresponding to the front-left wheel, the front-right wheel, the rear-left wheel, and the rear-right wheel; and the third controller may open at least one of the spring-constant switching valves such that the center cylinder is operated.

In the aforementioned suspension apparatus, the center cylinder is used as a buffer device. By operating the center cylinder, the volume of the region connected to the fluid cylinder(s) and the accumulator(s) (i.e., the volume of the closed region) is changed, which suppresses the pulsation.

The center cylinder may include a housing, and a control piston that is fitted into the housing such that the control piston can be moved with respect to the housing; and the control piston may be operated in at least one of the case (x) where the force applied to the control piston by the fluid pressures in the fluid cylinders corresponding to two of the wheels in diagonal positions is not equal to the force applied to the control piston by the fluid pressures in the fluid cylinders corresponding to the other two wheels in diagonal positions, and the case (y) where the force applied to the control piston changes due to a change in the fluid pressure in the fluid cylinder corresponding to one of the wheels.

The pulsation is caused by opening the spring-constant switching valve, and the pulsation is transmitted to the center cylinder. Accordingly, at least one of the spring-constant switching valves is opened such that the center cylinder is operated. For example, the spring-constant switching valves corresponding to the front-right wheel and the rear-left wheel are opened first, and the spring-constant switching valves corresponding to the front-left wheel and the rear-right wheel are opened next. Alternatively, the spring-constant switching valves are opened one by one. That is, the spring-constant switching valves are divided into groups such that each group includes at least one spring-constant switching valve.

In the case where the two spring-constant switching valves are opened first and the other two spring-constant switching valves are opened next, the spring-constant switching valves can be opened quickly as compared to the case where the spring-constant switching valves are opened one by one.

The spring-constant switching valve may be an electromagnetic valve; and the third controller may control the electric current supplied to the electromagnetic valve according to a duty ratio.

By controlling the spring-constant switching valve according to the duty ratio, the pulsation can be suppressed as compared to when the spring-constant switching valve is opened immediately.

The duty ratio may be set according to the pressure difference between the upstream and downstream of the spring-constant switching valve.

The duty ratio is a ratio of the period during which the spring-constant switching valve is open to the period during which the spring-constant switching valve is controlled, and is represented by an equation, Topen/ (Topen + Tshut). As the duty ratio increases, the period during which the valve is open increases, and the opening degree of the valve is substantially increased. In the suspension apparatus according to the invention, as the pressure difference between the upstream and the downstream of the valve increases, the duty ratio decreases. This effectively suppresses the pulsation.

The spring-constant switching valve may be controlled according to the duty ratio only when the difference in pressure between the upstream and the downstream of the spring-constant switching valve is equal to or greater than a predetermined value. Also, the difference in pressure between the upstream and downstream of the spring-constant switching valve may be actually detected, or estimated based on the amount of change in the vehicle height when the spring-constant switching valve is closed. By estimating the pressure difference based on the amount of change in the vehicle height, the need for providing a fluid-pressure sensor can be eliminated, which reduces cost.

The third controller may open the closed region that includes the accumulator(s) and the fluid cylinder(s).

By opening the closed region, the pulsation caused by opening the spring-constant switching valve can be suppressed. The phrase "the closed region is opened" signifies that communication is permitted between the closed region and the atmosphere or a low-pressure tank such as a reservoir.

The suspension apparatus may include the second controller. The electromagnetic control valve provided between the fluid cylinder and the fluid source may be a flow control valve that controls the flow of the fluid to and from the fluid cylinder. The third controller may open the flow control valve when the spring-constant switching valve is operated.

In the aforementioned suspension apparatus, by opening the flow control valve so that communication is permitted between the closed region and the low-pressure source in the fluid source, the pulsation is suppressed. In other words, by permitting communication between the closed region and the low-pressure source, the closed region is opened. The flow control valve is provided for each cylinder, and therefore may be referred to also as "individual control valve".

It is preferable to open the spring-constant switching valve when the individual control valve is open. However, the spring-constant switching valve and the individual control valve may be opened simultaneously. The period during which the individual control valve is open is extremely short, and is set to a value near "0". Further, the closed region may be increased by permitting communication between the fluid cylinder and the high-pressure source even if the fluid cylinder is not connected to the low-pressure source, whereby the pulsation can be dispersed.

The fluid source may include a control passage, a high-pressure source and a low-pressure source that are connected to the control passage, and a drain control valve provided between the control passage and the low-pressure source. By controlling the fluid source and the drain control valve, it is possible to select either a mode where the fluid flows from the high-pressure source to the fluid cylinder or a mode where the fluid flows from the fluid cylinder to the low-pressure source. The third controller may open the flow control valve when the mode where the fluid flows from the fluid cylinder to the low-pressure source is selected by controlling the fluid source.

The third controller may open the spring-constant switching valve after the main switch of a vehicle is turned off and an occupant gets off the vehicle.

By opening the spring-constant switching valve after the main switch is turned off and the occupant gets off the vehicle, the occupant discomfort due to the pulsation can be prevented.

Alternatively, the third controller may open the spring-constant switching valve after a predetermined time has elapsed since opening and closing of a door are detected after the main switch of the vehicle is turned off.

With this configuration, the vehicle height is changed after the predetermined time has elapsed since opening and closing of the door are detected. That is, the vehicle height is changed after the occupant leaves the vehicle. This reduces the likelihood that the occupant will be surprised by any sudden changes in vehicle height.

The spring-constant switching valve may be a spool valve that includes a housing that extends in the axial direction, and a spool that is fitted into the housing such that the spool is slidable. The spool valve regulates communication between the fluid cylinder and the accumulator by moving the spool. The third controller may reduce movement of the spool with respect to the housing as the sum of the fluid pressure in the fluid cylinder and the fluid pressure in the accumulator increases.

The fluid pressure in the fluid cylinder and the fluid pressure in the accumulator are applied to the spool, which reduces movement of the spool. Therefore, the spool valve does not open or close quickly, and communication between the accumulator and the fluid cylinder is not permitted quickly. As a result, the pulsation can be suppressed.

The suspension apparatus may include the second controller. The electromagnetic control valve included in the second controller may be a flow control valve that controls the flow of the fluid to and from the fluid cylinder. The third controller may suppress the pulsation of the fluid caused by operating the flow control valve.

When the vehicle height is adjusted, the operating fluid flows between the fluid cylinder and the fluid source. If the flow control valve is operated when the vehicle height is adjusted, the fluid starts to flow suddenly, or the fluid is stopped suddenly. This causes the pulsation. The pulsation is caused when the flow control valve is closed, and when the flow control valve is opened. As the flow amount of the fluid at the time point when the flow control valve is closed increases, the pulsation becomes more likely to be caused.

The third controller may be operated in the case where the flow control valve is closed or in the case where the flow control valve is opened. Alternatively, the third controller may be operated in the both cases.

The third controller may suppress the pulsation in the case where the adjustment of the vehicle height starts or in the case where the adjustment ends. Alternatively, the third controller may suppress the pulsation in the both cases.

The third controller may be operated in the case where the vehicle height is decreased, or in the case where the vehicle height is increased. Alternatively, the third controller may be operated in the both cases.

The fluid cylinder may include a left fluid cylinder and a right fluid cylinder that are provided for at least one of a pair of front wheels and a pair of rear wheels; the flow control valve may include a left flow control valve that is provided between the left fluid cylinder and the corresponding fluid source, and a right flow control valve that is provided between the right fluid cylinder and the corresponding fluid source; the suspension apparatus may include a communication-valve that regulates communication between the left fluid cylinder and the right fluid cylinder; and the third controller may select a first mode where one of the left flow control valve and the right flow control valve is open and the other flow control valve is closed, and the communication-valve is open to suppress the flow amount of the fluid.

The third controller may sequentially operate the left flow control valve corresponding to the left fluid cylinder and the right flow control valve corresponding to the right fluid cylinder.

When either the left flow control valve or the right flow control valve is opened and the other flow control valve is closed with the communication-valve opened, the fluid flows between two fluid cylinders and the fluid source via one flow control valve. This reduces the pulsation, as compared to when the fluid flows between two fluid cylinders and the fluid source via respective two flow control valves.

For example, when the fluid flows between two fluid cylinders and the fluid source via respective two flow control valves, the pulsation is caused in each of the two flow control valves. In contrast, in the suspension apparatus according to the invention, the pulsation is caused in only one flow control valve. Accordingly, the pulsation can be suppressed. Also, the fluid flows between one of the two fluid cylinders and the flow source via the communication-valve and the flow control valve. Therefore, the flow amount of fluid is reduced as compared to when the fluid flows via one flow control valve. Also, the maximum cross sectional area of each flow control valve is the same. Accordingly, the flow amount of fluid flowing through one flow control valve is less than the sum of the flow amounts of fluid flowing through two flow control valves. This also helps to suppress the pulsation.

The third controller may select a second mode where the communication-valve is open and both the left flow control valve and the right flow control valve are open to suppress a change in the flow of the fluid after the first mode is selected. Alternatively, the third controller may select a third mode where both of the left flow control valve and the right flow control valve are open and the communication-valve is closed to permit the greatest amount of fluid to flow after the second mode is selected, when the vehicle height is adjusted.

By selecting the second mode after the first mode is selected, and selecting the third mode after the second mode is selected, the pulsation caused by closing the communication-valve can be suppressed.

The third controller may select the first mode during either a predetermined time period after control to decrease the vehicle height is started, or the predetermined time period before the control is completed.

With this configuration, the flow amount of fluid flowing in the fluid cylinder can be reduced by selecting the first mode during at least one of a predetermined period after the control to decrease the vehicle height is started, and the predetermined period before the control is completed. This suppresses a sharp change in the speed at which the vehicle height changes. This also reduces the absolute value of the vertical acceleration when the control to decrease the vehicle height is started and when the control is completed. Also, if the third mode is selected during a time period other than the predetermined time period, the time required to decrease the vehicle height can be reduced. If the predetermined time period is too short, the pulsation cannot be sufficiently reduced. If the predetermined time period is too long, the time required to decrease the vehicle height is increased. Taking this into account, the time period during which the first mode is selected is appropriately predetermined.

The sum of the periods of time during which the first mode and the second mode are selected may be predetermined. In this case, if the period during which the second mode is selected is too short, the pulsation caused by operating the communication-valve cannot be sufficiently suppressed. Taking this into account, the sum of the time periods during which the first mode and the second mode are selected is appropriately predetermined.

The fluid cylinder may be provided for each of a front-left wheel, a front-right wheel, a rear-left wheel, and a rear-right wheel. The flow control valve may be provided between each of the fluid cylinders and the fluid source. The suspension apparatus may include a center cylinder that is operated based on the relation among the fluid pressures in the fluid cylinders corresponding to the front-left wheel, the front-right wheel, the rear-left wheel, and the rear-right wheel. The third controller may operate at least one of the flow control valves such that the center cylinder is operated.

By operating at least one of the flow control valves such that the center cylinder is operated, the pulsation caused by operating the flow control valve can be suppressed.

The solenoid of the electromagnetic control valve may be connected to a backup power source included in a brake device for the vehicle.

In the aforementioned suspension apparatus, both of a main power source and a backup power source included in the brake device are connected to the solenoid of the electromagnetic valve. The main power source or the backup power source is selected to supply electric energy. As a result, if the main power source cannot supply electric energy, the backup power source supplies electric energy. A backup power source may be provided exclusively for the suspension apparatus. However, by using the backup power source for the brake device, the need for providing the backup power source exclusively for the suspension apparatus can be eliminated. The backup power source may be a battery, a capacitor, or the like.

The third controller may select the power source to supply electric energy to the solenoid of the electromagnetic control valve based on the state of a power source device that includes the main power source and the backup power source provided in the vehicle.

If the main power source is operating normally, the main power source is used. If the main power source is not operating normally, the backup power source can be used. For example, if the output voltage of the main power source is equal to or less than a predetermined voltage, or if the main power source is disconnected from the suspension apparatus, it is determined that the main power source is not operating normally. In the case where the main power source is operating normally, for example, if the backup power source is used in the brake device, or if the output voltage of the backup power source is low, the main power source may be used.

The suspension apparatus may further include a backup power source.

### BRIEF DESCRIPTION OF THE DRAWINGS

The features, advantages thereof, and technical and industrial significance of this invention will be better understood by reading the following detailed description of the example embodiments of the invention, when considered in connection with the accompanying drawings, in which:
FIG. 1 illustrates a diagram of the entire configuration of a suspension apparatus according to an example embodiment of the invention;
FIG. 2 illustrates a diagram of a suspension ECU of the suspension apparatus and peripheral equipment;
FIG. 3 illustrates a flowchart of a spring-constant switching time pulsation suppression program stored in the suspension ECU;
FIG. 4A and 4B illustrate flowcharts of a spring-constant switching valve control program stored in the suspension ECU;
FIG. 5 illustrates a flowchart of a control executed in step S3 of the spring-constant switching time pulsation suppression program;
FIG. 6 illustrates a flowchart of another control executed in step S3 of the spring-constant switching time pulsation suppression program;
FIG. 7 illustrates a flowchart of a power-source selection program stored in the suspension ECU;
FIG. 8 illustrates a flowchart of another control executed in step S3 of the spring-constant switching time pulsation suppression program;
FIG. 9 illustrates a flowchart of another control executed in step S3 of the spring-constant switching time pulsation suppression program;
FIG. 10 illustrates a diagram showing an example of control executed according to the spring-constant switching time pulsation suppression program;
FIG. 11 illustrates a cross sectional view of another spring-constant switching valve of the suspension apparatus;
FIG. 12 illustrates a cross sectional view of another spring-constant switching valve of the suspension apparatus;
FIG. 13A and 13B illustrate flowcharts of a control-valve pulsation-suppression program stored in the suspension ECU;
FIGS. 14A to 14F illustrate an example of control executed according to the control-valve pulsation-suppression program;
FIG. 15 illustrates an example of control executed according to the control-valve pulsation-suppression program;
FIG. 16 illustrates a cross sectional view of an individual control valve of the suspension apparatus; and
FIG. 17 illustrates a flowchart of another control-valve pulsation-suppression program stored in the suspension ECU.

### DETAILED DESCRIPTION OF THE EXEMPLE EMBODIMENTS

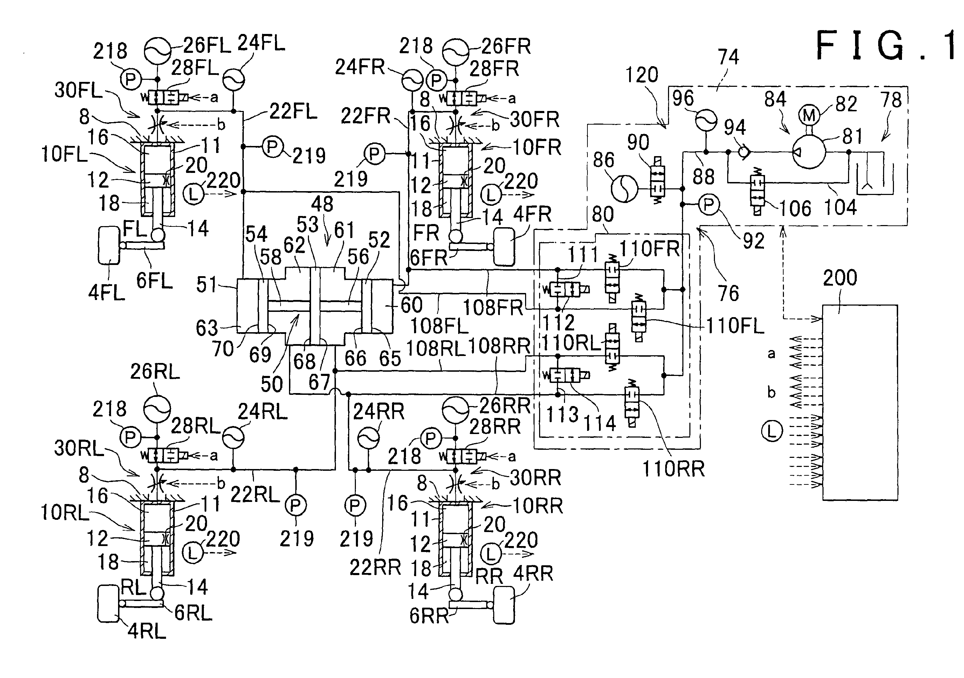

In the following description and the accompanying drawings, the present invention will be described in more detail with reference to example embodiments. A suspension apparatus that is employed in a plurality of embodiments of the invention will be described with reference to the drawings. As shown in FIG. 1, wheel-holding devices 6FL, 6FR, 6RL, and 6RR hold a front-left wheel 4FL, a front-right wheel 4FR, a rear-left wheel 4RL, and a rear-right wheel 4RR, respectively. Suspension cylinders 10FL, 10FR, 10RL, and 10RR and suspension springs (not shown) are provided between the wheel-holding devices 6FL, 6FR, 6RL, and 6RR and a vehicle body 8, respectively. The suspension cylinders 10FL, 10FR, 10RL, and 10RR are fluid cylinders that are operated using operating fluid. Hereinafter, when the positions of components such as the suspension cylinders 10 need to be distinguished from each other, reference characters that indicate the positions of wheels, FL, FR, RL, and RR will be described. Otherwise, the reference characters FL, FR, RL, and RR will be omitted.

The suspension cylinders 10FL, 10FR, 10RL, and 10RR have the same structure. Each suspension cylinder 10 includes a housing 11; a piston 12; and a piston rod 14. The piston 12 is fitted into the housing 11 such that the piston 12 can move with respect to the housing 11. The piston rod 14 is connected to the wheel-holding device 6 such that the piston rod 14 does not move vertically with respect to the wheel-holding device 6. The housing 11 is connected to the vehicle body 8 such that the housing 11 does not move vertically with respect to the vehicle body 8. The piston 12 includes a communication passage 20. The communication passage 20 connects two fluid chambers 16 and 18. The piston serves as a partition between the two fluid chambers 16 and 18. An orifice is provided in the communication passage 20. The orifice generates damping force according to the speed at which the piston 12 moves with respect to the housing 11 (i.e., the flow speed of the operating fluid flowing through the orifice). The suspension cylinder 10 functions as a shock absorber.

Fluid chambers 16 of the suspension cylinders 10FL, 10FR, 10RL, and 10RR are connected to individual passages 22FL, 22FR, 22RL, and 22RR, respectively. Accumulators 24FL, 24FR, 24RL, and 24RR, and accumulators 26FL, 26FR, 26RL, and 26RR are connected to the individual passages 22FL, 22FR, 22RL, and 22RR, respectively. The accumulators 24FL, 24FR, 24RL, and 24RR are provided for the suspension cylinders 10FL, 10FR, 10RL, and 10RR, respectively. The accumulators 26FL, 26FR, 26RL, and 26RR are provided for the suspension cylinders 10FL, 10FR, 10RL, 10RR, respectively. The accumulators 24FL, 24FR, 24RL, and 24RR are in parallel with the accumulators 26FL, 26FR, 26RL, and 26RR, respectively. Spring-constant switching valves 28FL, 28FR, 28RL, and 28RR are provided between the suspension cylinders 10FL, 10FR, 10RL, and 10RR and the accumulators 26FL, 26FR, 26RL, and 26RR, respectively.

Each of the accumulators 24 and 26 functions as a spring. For example, each of the accumulators 24 and 26 includes a housing and a partition between first and second chambers inside the housing. The first chamber is connected to the individual passage 22. An elastic body is provided in the second chamber. When the volume of the first chamber increases, the volume of the second chamber decreases. This generates an elastic force. The accumulators 24 and 26 may be bellows-type accumulators, bladder-type accumulators, piston-type accumulators, or the like. In this embodiment, the spring constant of the accumulator 24 is greater than that of the accumulator 26. Hereinafter, the accumulator 24 will be referred to as "high-pressure accumulator 24", and the accumulator 26 will be referred to as "low-pressure accumulator 26". In this embodiment, the spring-constant switching valve 28 is a seating valve. The spring-constant switching valve 28 is opened and closed by causing a valve element (not shown) to contact and leave a valve seat (not shown). The spring-constant switching valve 28 is a normally-open electromagnetic valve.

Variable orifices 30FL, 30FR, 30RL, and 30RR are provided in the individual passages 22FL, 22FR, 22RL, and 22RR, respectively. As described above, the operating fluid is caused to flow into and flow from the fluid chambers 16 by vertically moving the wheel-holding devices 6FL, 6FR, 6RL, and 6RR with respect to the vehicle body 8. The cross sectional area of each individual passage 22 through which the operating fluid flows is controlled using the variable orifice 30, whereby the dampinig force generated in the suspension cylinder 10 is controlled.

The suspension cylinders 10FL, 10FR, 10RL, and 10RR are connected to a center cylinder 48 via the individual passages 22FL, 22FR, 22RL, and 22RR, respectively. The center cylinder 48 includes a piston assembly 50 and a cylinder housing 51. The piston assembly 50 is formed by connecting three pistons. The cylinder assembly 50 is housed in a cylinder housing 51 such that fluid-sealing is provided and the piston assembly 50 is slidable. The piston assembly 50 includes a first piston 52, a second piston 53, and a third piston 54 in the stated order from the right side. The first piston 52 is connected to the second piston 53 in series by a rod 56. The second piston 53 is connected to the third piston 54 in series by a rod 58.

The cylinder housing 51 includes a cylinder bore. The cylinder bore includes a large-diameter portion and small-diameter portions. By fitting the piston assembly 50 into the cylinder bore, four fluid chambers are formed in the housing 51. The second piston 53 is fitted into the large-diameter portion of the cylinder bore. The first piston 52 and the third piston 54 are fitted into the respective small-diameter portions. Accordingly, the diameter of each of the first piston 52 and the third piston 54 is less than the diameter of the second piston 53. The diameter of the first piston 52 is the same as that of the third piston 54. A first fluid chamber 60 is formed on the side of the first piston 52 facing away from the second piston 53. A second fluid chamber 61 is formed between the first piston 52 and the second piston 53. A third fluid chamber 62 is formed between the second piston 53 and the third piston 54. A fourth fluid chamber 63 is formed on the side of the third piston 54 facing away from the second piston 53. The first piston 52 has an outer surface 65 that faces the first fluid chamber 60, and an inner surface 66 that faces the second fluid chamber 61. The second piston 53 has an inner surface 67 that faces the second fluid chamber 61, and an inner surface 68 that faces the third fluid chamber 63. The third piston 54 includes an inner surface 69 that faces the third fluid chamber 62, and an outer surface 70 that faces the fourth fluid chamber 63.

The fluid chamber 16 of the suspension cylinder 10FR for the front-right wheel 4FR is connected to the first fluid chamber 60. Therefore, the outer surface 65 receives a fluid pressure from the fluid chamber 16 of the suspension cylinder 10FR. The outer surface 70 receives a fluid pressure from the suspension cylinder 10FL for the front-left wheel 4FL. In this embodiment, the diameter of the first piston 52 is the same as that of the third piston 54. The area of the outer surface 65 that receives the fluid pressure is the same as the area of the outer surface 70 that receives the fluid pressure (hereinafter, the area that receives the fluid pressure will be referred to as "pressure-receiving area"). The second fluid chamber 61 between the first piston 52 and the second piston 53 is connected to the suspension cylinder 10RL for the front-rear wheel 4RL via the individual passage 22RL. The inner surface 66 of the first piston 52 and the inner surface 67 of the second piston 53, which face the opposite directions, receive a fluid pressure from the suspension cylinder 10RL for the rear-left wheel 4RL. The force applied to the first piston 52 by the fluid pressure in the second fluid chamber 61 is offset by the force applied to the partial pressure-receiving area of the inner surface 67 that is equal to the entire pressure-receiving area of the inner surface 66. Therefore, the effective pressure-receiving area of the second fluid chamber 61 is obtained by subtracting the pressure-receiving area of the inner surface 66 from the pressure-receiving area of the inner surface 67. Similarly, the third fluid chamber 62 is connected to the suspension cylinder 10RR for the rear-right wheel 4RR via the individual passage 22RR. The effective pressure-receiving area of the third fluid chamber 62 is obtained by subtracting the pressure-receiving area of the inner surface 69 from the pressure-receiving area of the inner surface 68. That is, the piston assembly 50 receives the force represented by the product of the fluid pressure in the second fluid chamber 61 and the effective pressure-receiving area of the second fluid chamber 61, and the force represented by the product of the fluid pressure in the third fluid chamber 62 and the effective pressure-receiving area of the third fluid chamber 62.

As described above, the diameter of the first piston 52 is the same as that of the third piston 54. Therefore, the effective pressure-receiving area of the second fluid chamber 61 is equal to the effective pressure-receiving area of the third fluid chamber 62. Further, in this embodiment, the diameter of the second piston 53 is set such that the effective pressure-receiving area of each of the second fluid chamber 61 and the third fluid chamber 62 become equal to the effective pressure-receiving area of each of the first fluid chamber 60 and the fourth fluid chamber 63.

A vehicle-height adjustment device 74 is provided in the suspension apparatus. The vehicle-height adjustment device 74 includes a high-pressure source 76; a reservoir that serves as a low-pressure source 78; and an individual control valve device 80. The high-pressure source 76 includes a pump device 84, and an accumulator 86 for accumulating pressure. The pump device 84 includes a pump 81 and a pump motor 82. The pump 81 draws the operating fluid in the reservoir 78, and discharges the operating fluid. The pressurized operating fluid is stored in the accumulator 86. The accumulator 86 is connected to a control passage 88 via a control valve 90 that is a normally-closed electromagnetic valve. A fluid-source pressure sensor 92 is provided in the control passage 88. The fluid-source pressure sensor 92 detects the discharge pressure of the pump 81 and the pressure of the accumulator 86.

In the control passage 88, a check valve 94 and an accumulator 96 for reducing noise are provided on the discharge-side of the pump 81. Also, a drain passage 104, which connects the high-pressure side and the low-pressure side of the pump 81, is provided. A drain control valve 106, which is a normally-closed electromagnetic valve, is provided in the drain passage 104.

The drain control valve 106 may be a mechanical pilot valve that is opened and closed by the discharge pressure of the pump 81. For example, when the discharge pressure of the pump 81 is high, the drain control valve 106 is closed. Otherwise, the drain control valve 106 is open.

The individual control valve device 80 includes individual control valves 110FL, 110FR, 110RL, and 110RR that are provided in individual control passages 108FL, 108FR, 108RL, and 108RR, respectively. The individual control passages 108FL, 108FR, 108RL, and 108RR connect the control passage 88 to the individual passages 22FL, 22FR, 22RL, and 22RR, respectively. A front-wheel side communication passage 111 connects the individual control passages 108FL and 108FR. A communication-valve 112 is provided in the communication passage 111. The communication-valve 112 regulates communication between the front-left wheel side and the front-right wheel side. A rear-wheel side communication passage 113 connects the passages 108RL and 108RR. A communication-valve 114 is provided in the communication passage 113. The communication-valve 114 regulates communication between the rear-left wheel side and the rear-right wheel side. The suspension cylinders 10 are connected to the control passage 88 via the respective individual control passages 108 and the respective individual passages 22.

The individual control valves 110FL, 110FR, 110RL, and 110RR, and the communication-valves 112 and 114 are normally-closed electromagnetic valves. By individually controlling each of the individual control valves 110FL, 110FR, 110RL, and 110RR while keeping the communication-valves 112 and 114 closed, the distances between the wheel-holding devices 6FL, 6FR, 6RL, and 6RR and the vehicle body 8 can be controlled. The distance between the wheel-holding device 6 and the vehicle body 8 corresponds to the vehicle height. Hereinafter, this distance may also be referred to as "wheel-to-body distance". In this embodiment, the high-pressure source 76, the reservoir 78, and the like constitute a fluid-pressure source 120 that is regarded as the fluid source according to the invention. The individual control valves 110 are regarded as the flow control valves according to the invention.

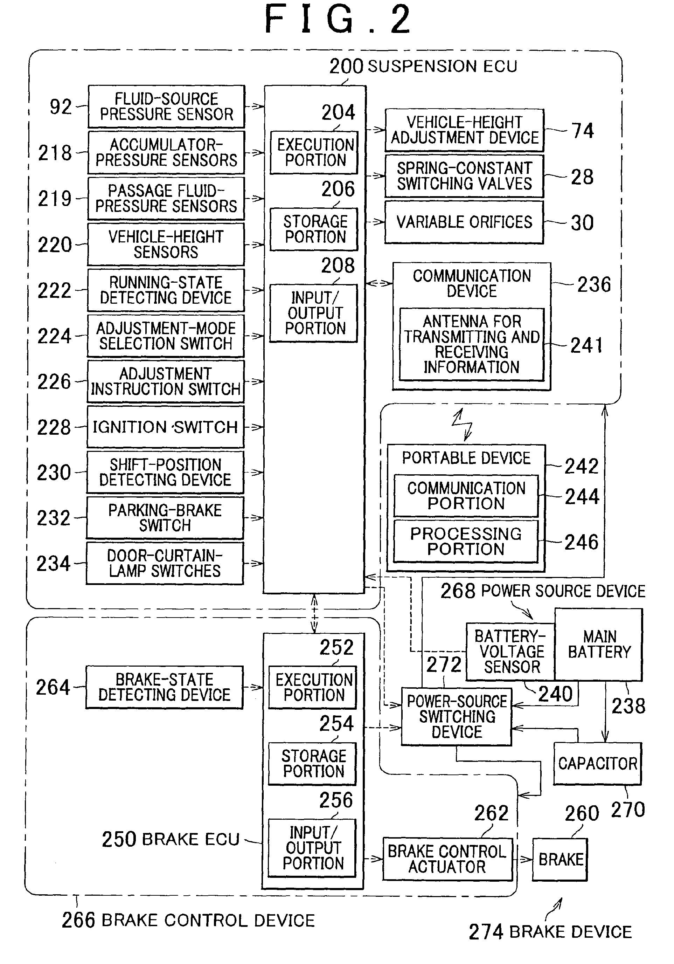

As shown in FIG. 2, a suspension ECU 200, which includes a computer, controls the suspension apparatus. The suspension ECU 200 includes an execution portion 204, a storage portion 206, an input/output portion 208. The input/output portion 208 is connected via a drive circuit (not shown) to the spring-constant switching valves 28, the coils of the variable orifices 30, the vehicle-height adjustment device 74 (i.e., the control valve 90, the individual control valves 110, the communication-valves 112 and 114, and the coil of the drain control valve 106, the pump motor 81, and the like). Also, the input/output portion 208 is connected to a fluid-source pressure sensor 92, accumulator-pressure sensors 218, passage fluid-pressure sensors 219, vehicle-height sensors 220, a running-state detecting device 222, an adjustment-mode selection switch 224, an adjustment instruction switch 226, an ignition switch 228, a shift-position detecting device 230, a parking-brake switch 232, door-courtesy-lamp switches 234, a communication device 236, a battery-voltage sensor 240, and the like. The accumulator-pressure sensors 218 detect the fluid pressures in the respective low-pressure accumulators 26 corresponding to the wheels 4FL, 4FR, 4RL, and 4RR. The passage fluid-pressure sensors 219, which are provided in the respective individual passages 22, detect the fluid pressures in the respective individual passages 22. The vehicle-height sensors 220, which are provided for the wheels 4FL, 4FR, 4RL, and 4RR, detect the distances between the respective wheel-holding devices 6 and the vehicle body 8. The door-courtesy-lamp switches 234 are provided for respective doors of the vehicle. The battery-voltage sensor 240 detects the voltage of the main battery 238 that serves as a main power source.

The running-state detecting device 222 detects the state where the vehicle is running. The running-state detecting device 222 includes at least one of a longitudinal-acceleration sensor, a lateral-acceleration sensor, and a speed sensor. The longitudinal-acceleration sensor determines whether the vehicle is decelerating or accelerating. The lateral-acceleration sensor determines whether the vehicle is turning. The speed sensor detects the speed of the vehicle. A yaw rate sensor, a steering angle sensor, and the speed sensor may be used to determine whether the vehicle is turning.

A driver operates the adjustment-mode selection switch 224. By operating the switch 224, an automatic mode or a manual mode is selected. When the automatic mode is selected, the vehicle height is changed upon satisfaction of a predetermined condition. When the manual mode is selected, the vehicle height is changed according to the instruction from the adjustment instruction switch 226.

The driver manually operates the adjustment instruction switch 226 to increase or decrease the vehicle height. By operating the adjustment instruction switch 226 to increase or decrease the vehicle height, the vehicle height is increased or decreased by a predetermined amount (i.e., by one level).

The communication device 236 includes an antenna 241 for transmitting and receiving information. The communication device 236 communicates with a portable device 242 in a predetermined region. The portable device 242 includes a communication portion 244, and a processing portion 246. The communication portion 244 includes an antenna for transmitting and receiving information. The processing portion 246 includes a computer that stores, creates, and sends identification information. The portable device 242 includes a plurality of operation portions. The portable device 242 sends information concerning the instruction to increase or decrease the vehicle height according to the operation of the operation portions, together with the identification information.

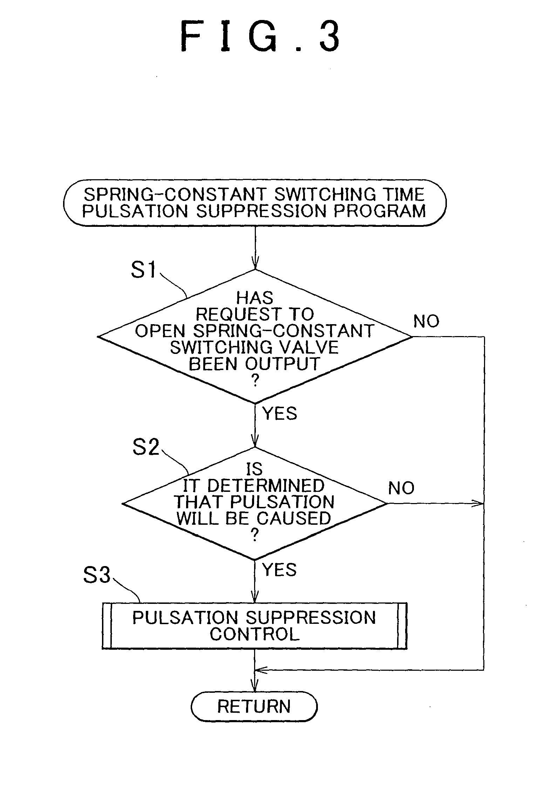

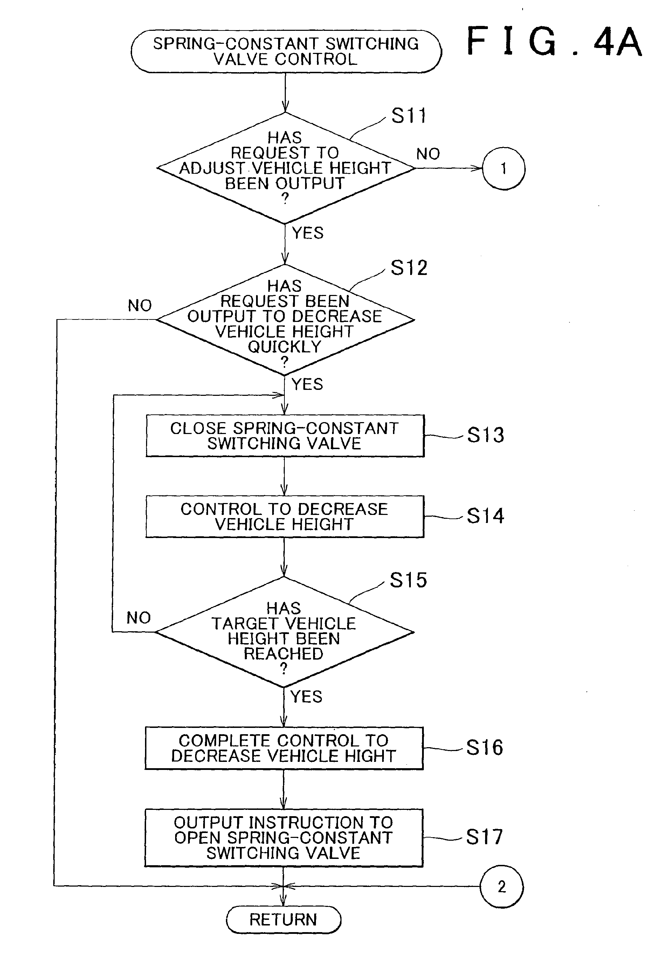

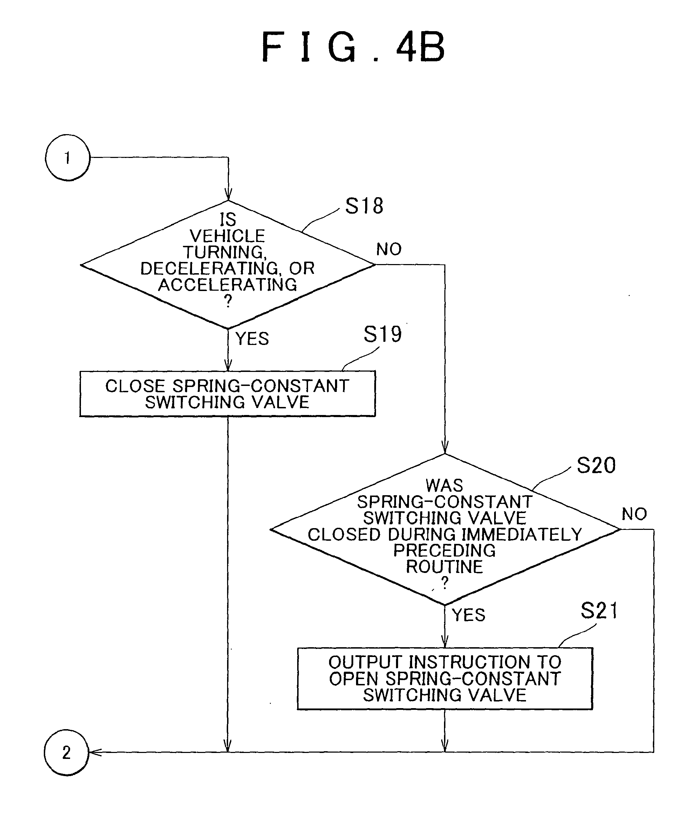

When the communication device 236 receives the information sent from the portable device 242, the communication device 236 determines whether the information is sent to the host vehicle based on the identification information included in the sent information. If it is determined that the information is sent to the host vehicle, the adjustment of the vehicle height starts according to the instruction from the portable device 242. Even if the instruction to adjust the vehicle height is not sent from the portable device 242, when it is determined that the portable device 242 enters the predetermined region, the vehicle height may start to be adjusted (decreased). Also, the storage portion 206 stores a spring-constant switching time pulsation suppression program, a spring-constant switching valve control program, and the like. FIG. 3 illustrates the flowchart of the spring-constant switching time pulsation suppression program. FIG. 4A and 4B illustrate the flowcharts of the spring-constant switching valve control program.

As shown in FIG. 2, the suspension ECU 200 is connected to a brake ECU 250. The suspension ECU 200 communicates with the brake ECU 250. The brake ECU 250 includes an execution portion 252, a storage portion 254, an input/output portion 256. The input/output portion 256 is connected to a brake control actuator 262, a brake-state detecting device 264, and the like. The brake control actuator 262 controls the operating state of the brake 260. The brake-state detecting device 264 detects the state of a member for applying brake that is operated by the driver. The brake control actuator 262 is controlled to obtain a required braking force. The required braking force is determined based on the state of the member for applying brake, which is detected by the brake-state detecting device 264.

For example, in the case where a brake 260 is a hydraulic brake, the brake control actuator 262 may include a solenoid of a valve that can control the fluid pressure in a brake cylinder of the hydraulic brake. In the case where the brake 260 is an electric brake where a friction member is pressed to a brake rotating body by a force generated by an electric motor, the brake control actuator 262 may include a drive circuit that can control electric current supplied to the electric motor. The brake-state detecting device 264 may include at least one of a force sensor and a stroke sensor. The force sensor detects the force applied to the brake pedal (or a physical quantity corresponding to the force, such as the pressure in a master cylinder). The stroke sensor detects the stroke of the brake pedal.

A brake control device 266 includes the brake ECU 250, the brake control actuator 262, and the brake-state detecting device 264. A power source device 268 is connected to the brake control device 266, and the suspension apparatus. The power source device 268 includes the main battery 238, a capacitor 270, and a power-source switching device 272. The main battery 238 serves as the main power source of the vehicle. The capacitor 270 is a backup power source included in the brake device 274.

The brake control device 266 and the suspension apparatus are operated using electric energy supplied from the main battery 238. However, when the main battery 238 cannot supply electric energy, the capacitor 270 supplies electric energy to the brake control device 266 and the suspension apparatus. In this embodiment, the power-source switching device 272 selects the main battery 238 or the capacitor 270 to supply electric energy. There is no backup power source exclusively for the suspension apparatus. Therefore, the capacitor 270, which is the backup power source included in the brake device 274, is used when the main battery 238 cannot be used.

The operation of the suspension apparatus having the aforementioned configuration will be described. In the center cylinder 48, the piston assembly 50 receives the forces corresponding to the fluid pressures in the suspension cylinders 10 provided for the respective wheels. Each force is represented by the product of the fluid pressure and the pressure-receiving area. When the vehicle does not move, the forces are balanced with each other. For example, when the distances between the wheel-holding devices 6FL and 6FR for the front-left and front-rear wheels 4FL and 4FR and the vehicle body 8 increase and the distances between the wheel-holding devices 6RL and 6RR for the rear-left and rear-right wheels 4RL and 4RR and the vehicle body 8 decrease due to the pitching of the vehicle (for example, during sudden acceleration), the fluid pressures in the suspension cylinders 10FL and 10FR for the front-left and front-rear wheels 4FL and 4FR decrease, and the fluid pressures in the suspension cylinders 10RL and 10RR for the rear-left and rear-right wheels 4RL and 4RR increase. Therefore, the fluid pressures applied to the outer surface 65 of the first piston 52 and the outer surface 70 of the third piston 54 decrease, and the fluid pressures applied to the inner surfaces 67 and 68 of the second piston 52 increase. In this case, the forces applied to the piston assembly 50 remains balanced with each other. Therefore, movement of the piston assembly 50 is suppressed, and the suspension cylinders 10 function substantially independently of each other. As a result, a great damping force is generated, which effectively suppresses the pitching of the vehicle.

As another example, when the distances between the wheel-holding devices 6FL and 6RL for the front-left and rear-left wheels 4FL and 4RL and the vehicle body 8 increase and the distances between the wheel-holding devices 6FR and 6RR for the front-right and rear-right wheels 4FR and 4RR decrease due to the rolling of the vehicle (for example, while the vehicle is turning to the left), the fluid pressures in the suspension cylinders 10FL and 10RL for the front-left and front-right wheels 4FL and 4RL decrease, and the fluid pressures in the suspension cylinders 10FR and 10RR for the front-right and rear-right wheels 4FR and 4RR increase. Accordingly, the fluid pressures applied to the outer surface 70 of the third piston 54 and the inner surface 67 of the second piston 53 decrease, and the fluid pressures applied to the outer surface 65 of the first piston 52 and the inner surface 68 of the second piston 53 increase. In the case where the forces applied to the piston assembly 50 are balanced with each other during rolling of the vehicle, the suspension cylinders 10 function substantially independently of each other. In other words, the center cylinder 48 does not function. When each piston 20 is moved, a great damping force is generated in each of the suspension cylinders 10, which effectively suppresses rolling.

When a force is applied to one of the wheels from a road surface, for example, when the force is applied to the suspension cylinder 10FL provided in the front-left wheel 4FL such that the distance between the wheel-holding device 6FL for the front-left wheel 4FL and the vehicle body 8 decreases (for example, when the front-left wheel 4FL goes on the protrusion of the road surface), the fluid pressures in the suspension cylinders 10FL and 10RR increase, and the fluid pressures in the suspension cylinders 10FR and 10RL decrease. Also, when the forces are applied to the wheels in the diagonal positions such that the wheels are moved in the same phase, for example, when the forces applied to the suspension cylinders 10FL and 10RR such that the distances between the wheel-holding devices 6FL and 6RR for the wheels 4FL and 4RR and the vehicle body 8 decrease, the fluid pressures in the suspension cylinders 10FL and 10RR increase, and the fluid pressures in the suspension cylinders 10FR and 10RL decrease. Accordingly, the fluid pressures applied to the outer surface 70 of the third piston 54 and the inner surface 68 of the second piston 52 increase, and the fluid pressures applied to the inner surface 67 of the second piston 52 and the outer surface 65 of the first piston 52 decrease. Therefore, the forces applied to the piston assembly 50 become unbalanced, and the piston assembly 50 is moved to the right in FIG. 1. As a result, the volumes of the fourth fluid chamber 63 and the third fluid chamber 62 increase and the volumes of the second fluid chamber 61 and the first fluid chamber 60 decrease. Accordingly, the operating fluid flows from the suspension cylinders 10FL and 10RR, and the operating fluid flows to the suspension cylinders 10FR and 10RL. That is, the operating fluid flows as it would when the center cylinder 48 permits communication between the two suspension cylinders 10FL, 10RR and the two suspension cylinders 10FR, 10RL.

In each suspension cylinder 10, the variable orifice 30 controls the damping characteristic. When the variable orifice 30 reduces the cross sectional area of the individual passage 22 through which the operating fluid flows, the suspension becomes hard. That is, the damping force is increased in the case where the relative speeds of the wheels and the vehicle body in the vertical direction are equal. When the variable orifice 30 increases the cross sectional area of the individual passage 22 through which the operating fluid flows, the suspension becomes soft. That is, the damping force is reduced in the case where the relative speeds of the wheels and the vehicle body are equal. The stiffness of the suspension is generally controlled according to the state of the adjustment-mode selection switch 224. However, the stiffness of the suspension may also be controlled based on the state where the vehicle runs. In this embodiment, if the vehicle is decelerating, accelerating, or turning, the suspension becomes hard to suppress any decrease in the stability of the vehicle.

By controlling the spring-constant switching valve 28, the spring constant is switched. When the spring-constant switching valve 28 is open, communication is permitted between the fluid chamber 16 and the two accumulators 24 and 26. As a result, the spring constant is reduced. When the spring-constant switching valve 28 is closed, communication between the fluid chamber 16 and the low-pressure accumulator 26 is interrupted, and communication is permitted between the fluid chamber 16 and the high-pressure accumulator 24. As a result, the spring constant is increased.

As the spring constant decreases, the operating fluid becomes more likely to flow into/from the suspension cylinder 10. Therefore, for example, high-frequency vibration is absorbed effectively, and occupant comfort is improved. Accordingly, in the embodiment, if the vehicle is decelerating, accelerating, or turning, the spring constant is increased. If the vehicle is running straight at a constant speed (i.e., each of the longitudinal acceleration and the lateral acceleration is equal to or lower than a predetermined value, or zero), the spring constant is reduced.

The vehicle-height adjustment device 74 controls the distances between the wheel-holding devices 6 for the four wheels 4 and the vehicle body 8. For example, when the distance between the wheel-holding device 6FL and the vehicle body 8 is increased, the control valve 90 is opened and the control valve 110FL is opened, whereby the operating fluid is supplied from the accumulator 86 to the suspension cylinder 10FL. When the actual distance becomes equal to a target value, the control valve 110FL is closed, and the control valve 90 is closed. The pump device 84 may be operated so that the operating fluid discharged from the pump 81 is supplied to the suspension cylinder 10FL.

When the distance is reduced, the control valve 110FL is opened and the drain control valve 106 is opened, whereby the operating fluid flows from the suspension cylinder 10FL to the reservoir 78. When the distance becomes equal to the target value, the control valve 110FL is closed, and the drain control valve 106 is closed.

The vehicle height may be adjusted quickly or slowly. That is, the speed at which the vehicle height changes may be set to a high speed or a low speed. When the vehicle speed is equal to or lower than a predetermined speed and the vehicle substantially stops, the vehicle height is adjusted quickly upon satisfaction of a predetermined condition. In this embodiment, the vehicle height is adjusted quickly, for example, (a) when information is received from the portable device 242, (b) when the adjustment instruction switch 226 is operated in the manual mode, or (c) when a predetermined condition is satisfied in the automatic mode.

When the ignition switch 228 is off, the vehicle height is usually adjusted to a standard height to improve the appearance of the vehicle. However, entry into the vehicle may be difficult if the vehicle height is adjusted to the standard height. Therefore, when the instruction to decrease the vehicle height is received from the portable device 242, the vehicle height is decreased.

If the instruction to decrease the vehicle height is output by operating the adjustment instruction switch 226 in the manual mode while the ignition switch 228 is ON, the vehicle height is decreased. Also, if the parking brake is operated and/or the shift lever is moved to a parking position from a drive position after the vehicle stops in the automatic mode, the vehicle height is automatically decreased because the occupant may get off the vehicle. Because the vehicle height is set to the standard height while the vehicle is running, the vehicle height is decreased so that the occupant can get off the vehicle easily when the vehicle stops. Also, if it is determined that the parking brake is not operated and the shift lever is not moved to the parking position when a predetermined time has elapsed since stop of the vehicle, the vehicle height is decreased. In these cases, preferably, the vehicle height is decreased quickly.

If the vehicle height is adjusted according to the instruction from the portable device 242 while the ignition switch 228 is OFF, the suspension ECU 200 is activated; the power-source switching device 272 selects the main battery 238 to supply electric power; and the individual control valves 110 and the spring-constant switching valves 28 are controlled.

If the instruction to increase the vehicle height is output by operating the adjustment instruction switch 226 in the manual mode while the ignition switch 228 is ON, the vehicle height is increased. Also, if a predetermined condition is satisfied in the automatic mode, for example, if the ignition switch 228 is turned on, and/or the shift lever is moved to the drive position from the parking position in the automatic mode, the vehicle height is increased. Because the vehicle height is decreased when the occupant gets on the vehicle, the vehicle height is increased to the standard height before the vehicle starts to run. Therefore, in these cases, preferably, the vehicle height is increased quickly.

Meanwhile, when the vehicle is running, the vehicle height may be adjusted according to the vehicle speed or the like. In this case, the vehicle height may be adjusted slowly.

In this embodiment, when the vehicle height is decreased quickly, the spring-constant switching valves 28 are closed. When the vehicle height is decreased, the target height needs to be achieved more quickly than when the vehicle height is increased. When the vehicle height is adjusted slowly, the spring-constant switching valves 28 do not need to be closed. By closing the spring-constant switching valve 28, communication between the individual passage 22 and the low-pressure accumulator 26 is interrupted. Therefore, when the spring-constant switching valve 28 is closed, the time required to adjust the vehicle height can be reduced relative to when the spring-constant switching valve 28 is open.

As described above, the spring-constant switching valves 28 are normally-open valves. Therefore, the spring-constant switching valves 28 are usually opened by stopping supply of electric current, after the adjustment of the vehicle height ends while the ignition switch 228 is OFF. Also, as described above, when the vehicle is running, the spring-constant switching valves 28 are usually open so that the spring constant is decreased to improve the occupant comfort. That is, the spring-constant switching valves 28 are usually closed when the adjustment of the vehicle height starts, and the spring-constant switching valves 18 are usually opened when the adjustment of the vehicle height ends. The vehicle height when the spring-constant switching valves 28 are closed is different from the vehicle height when the spring-constant switching valves 28 are opened. Therefore, the operating fluid surges between the accumulators 24 and the suspension cylinders 10 if the spring-constant switching valves 28 are opened when the adjustment of the vehicle height ends. This generates pulsation and abnormal noise. Also, this may sharply change the vehicle height.

Even in the case where the vehicle height is increased quickly, or in the case where the vehicle height is adjusted slowly, if the spring-constant switching valves 28 are closed when the adjustment of the vehicle height starts, the spring-constant switching valves 28 are kept closed while the vehicle height is being adjusted. In this case as well, the spring-constant switching valves 28 are opened after the adjustment of the vehicle height ends, which causes the pulsation.

Accordingly, in this embodiment, a control is executed to suppress the pulsation caused by opening the spring-constant switching valve 28. Note that the spring-constant switching valves 28 may be opened also when the vehicle, which has turned, decelerated, or accelerated, starts to run straight at a constant speed.

Meanwhile, when the adjustment of the vehicle height starts and when the adjustment ends, the individual control valve 110 is operated to adjust the distance between the wheel-holding device 6 for the corresponding wheel 4 and the vehicle body 8. Because the fluid pressure in the suspension cylinder 10 is different from that in the fluid-pressure source 120, the operating fluid suddenly flows or suddenly stops flowing when the individual control valve 110 is operated. This causes the pulsation. In this embodiment, another control is executed to suppress the pulsation caused by operating the individual control valve 110.

First, the control to suppress the pulsation caused by opening the spring-constant switching valve 28 will be described. FIG. 3 illustrates the flowchart of a spring-constant switching time pulsation suppression program. This program is executed at predetermined time intervals. In step S1, it is determined whether a request to open the spring-constant switching valve 28 has been output. In step S2, it is determined whether the pulsation will be caused by opening the spring-constant switching valve 28.

The spring-constant switching valves 28 are controlled by executing a spring-constant switching valve control program shown in FIG. 4A and 4B. In step S11, it is determined whether a request to adjust the vehicle height has been output. If it is determined that the request to adjust the vehicle height has been output (YES in step S11), it is determined whether the request has been output to decrease the vehicle height quickly in step S12. If it is determined that the request has been output to decrease the vehicle height quickly (YES in step S12), the spring-constant switching valve 28 is closed in step S13, and the control to decrease the vehicle height is executed using the vehicle-height adjustment device 74 in step S14. In step S15, it is determined whether the actual vehicle height has reached the target vehicle height. If it is determined that the actual vehicle height has reached the target vehicle height (YES in step S 15), the adjustment of the vehicle height ends in step S16, and a request (instruction) to open the spring-constant switching valve 28 is output in step S17. One of the wheel-to-body distance on the front-wheel side and the wheel-to-body distance on the rear-wheel side may be adjusted, while the other is not adjusted. The wheel-to-body distance on the front-wheel side and the wheel-to-body distance on the rear-wheel side may be both adjusted. The wheel-to-body distances on the front-left, front-right, rear-left, and rear-right sides may be adjusted simultaneously. The wheel-to-body distance on the front-wheel side and the wheel-to-body distance on the rear-wheel side may be adjusted in the stated order or in the reverse order. If it is determined that the request to decrease the vehicle height quickly has not been output (NO in step S12), step S 13 and subsequent steps are not executed.

If it is determined that the request to adjust the vehicle height has not been output (NO in step S11), it is determined whether the vehicle is turning, decelerating, or accelerating in step S 18. For example, it is determined whether the lateral acceleration and the longitudinal acceleration are equal to or greater than respective predetermined values. If it is determined that the vehicle is turning, decelerating, or accelerating (YES in step S 18), the spring-constant switching valve 28 is closed in step S 19. If the vehicle is neither turning, decelerating, nor accelerating (NO in step S18), it is determined whether the spring-constant switching valve 28 was closed during the immediately preceding routine, in step S20. If the spring-constant switching valve 28 was closed during the immediately preceding routine (YES in step S20), the instruction to open the spring-constant switching valve 28 is output in step S21.

That is, in step S21, the instruction to open the spring-constant switching valve 28 is output when the vehicle is no longer turning, accelerating, or decelerating and is instead running straight at a constant speed. The instruction to open the spring-constant switching valve 28 is also output when the vehicle is not turning or when the ignition switch 228 is OFF after the vehicle height is adjusted with the spring-constant switching valve 28 closed (for example, the vehicle height is increased with the spring-constant switching valve 28 closed, or the vehicle height is adjusted slowly with the spring-constant switching valve 28 closed).

In the case where the spring-constant switching valve 28 is opened according to the instruction after the adjustment of the vehicle height ends, it is determined that the pulsation will be caused. However, in the case where the spring-constant switching valve 28 is opened when the vehicle, which has turned, decelerated, or accelerated, starts to run straight at a constant speed, it is determined that the pulsation will not be caused. In this case, the vehicle height when the spring-constant switching valve 28 is closed is not significantly different from the vehicle height when the instruction is output. Therefore, the pulsation is not necessarily caused.

In this embodiment, if affirmative determinations are made in steps 1 and 2 (YES in steps 1 and 2) in the program shown in FIG. 3, the control to suppress the pulsation (hereinafter, referred to as "pulsation suppression control") is executed in step S3. Hereinafter, the pulsation suppression control will be described.

First, a first embodiment will be described. In the first embodiment, the pulsation caused by opening the spring-constant switching valve 28 is suppressed by opening the communication-valve 112 and/or the communication-valve 114. Hereinafter, the case where the wheel-to-body distance on the front-wheel side is decreased will be described. In this case, the communication-valve 112 is opened, and the spring-constant switching valves 28FL and 28FR are opened in a predetermined order.

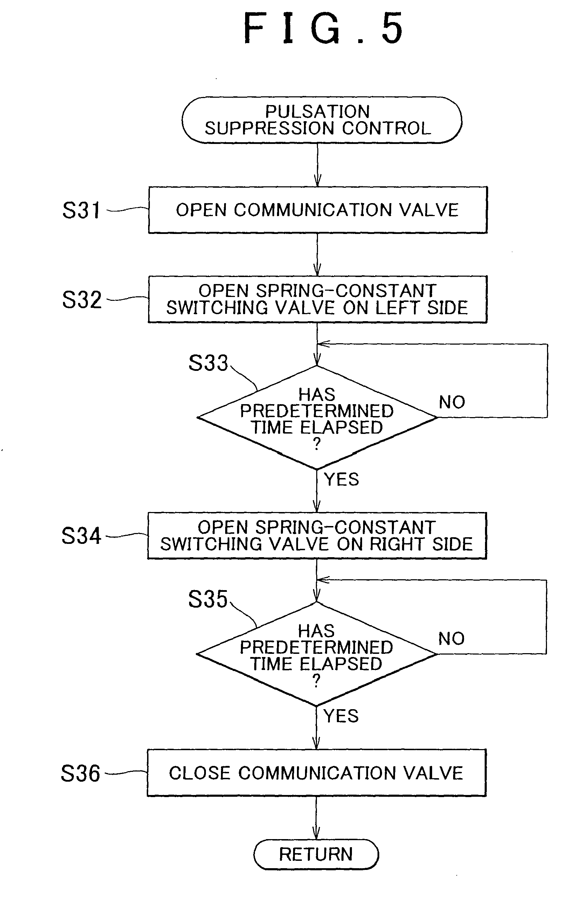

FIG. 5 illustrates the flowchart of the pulsation suppression control executed in step S3 of the program shown in FIG. 3. In step S31, the communication-valve 112 is opened, and in step S32, the spring-constant switching valve 28FL is opened. After the vehicle height is decreased, the fluid pressure in the low-pressure accumulator 26 that has been disconnected from the suspension cylinder 10 is higher than the fluid pressure in the individual passage 22. Therefore, the operating fluid in the low-pressure accumulator 26FL can be supplied to the suspension cylinder 10FL and the high-pressure accumulator 24FL for the front-left wheel 4FL, and to the suspension cylinder 10FR and the high-pressure accumulator 24FR for the front-right wheel 4FR. This suppresses the pulsation.

In step S33, it is determined whether a predetermined time has elapsed. If it is determined that the predetermined time has elapsed (YES in step S33), the spring-constant switching valve 28FR is opened in step S34. The operating fluid is supplied from the low-pressure accumulator 26FR to the suspension cylinder 10FR and the high-pressure accumulator 24FR for the front-right wheel 4FR, and to the suspension cylinder 4FL, the high-pressure accumulator 24FL, and the low-pressure accumulator 26FL for the front-left wheel 4FL. This suppresses the pulsation. In step S35, it is determined whether a predetermined time has elapsed. If it is determined that the predetermined time has elapsed (YES in step S35), the communication-valve 112 is closed in step S36.

By opening the communication-valve 112, the closed region that includes the accumulators 26 and the suspension cylinders 10 becomes greater than that when the communication-valve 112 is closed. Therefore, the pulsation can be dispersed. That is, if the pulsation is caused by opening the spring-constant switching valve 28, the pulsation can be suppressed by increasing the region where the pulsation is transmitted.

When the vehicle height is increased to improve the appearance of the vehicle when the ignition switch 228 is turned off, the operating fluid in the low-pressure accumulators 26 can be supplied to the fluid chambers 16 of the suspension cylinders 10 to increase the vehicle height.

In this embodiment, the spring-constant switching valve 28FL on the left side and the spring-constant switching valve 28FR on the right side are opened in the stated order. However, the spring-constant switching valves 28FL and 28FR may also be opened in the reverse order.

In the case where the amount of change in the wheel-to-body distance on the right side is different from that on the left side, the spring-constant switching valve 28 on the side where the amount of change is greater may be opened later in step S34. This is because communication is permitted between the low-pressure accumulators 26 on the right and left sides, and therefore the closed region is increased after the spring-constant switching valve 28 is opened in step S34. In this pulsation suppression control, the spring-constant switching valves 28 on the right and left sides may be opened simultaneously. When the spring-constant switching valves 28 on the right and left sides are opened simultaneously, the pulsation suppression control can be completed more quickly than when the valves 28 on the right and left sides are opened sequentially.

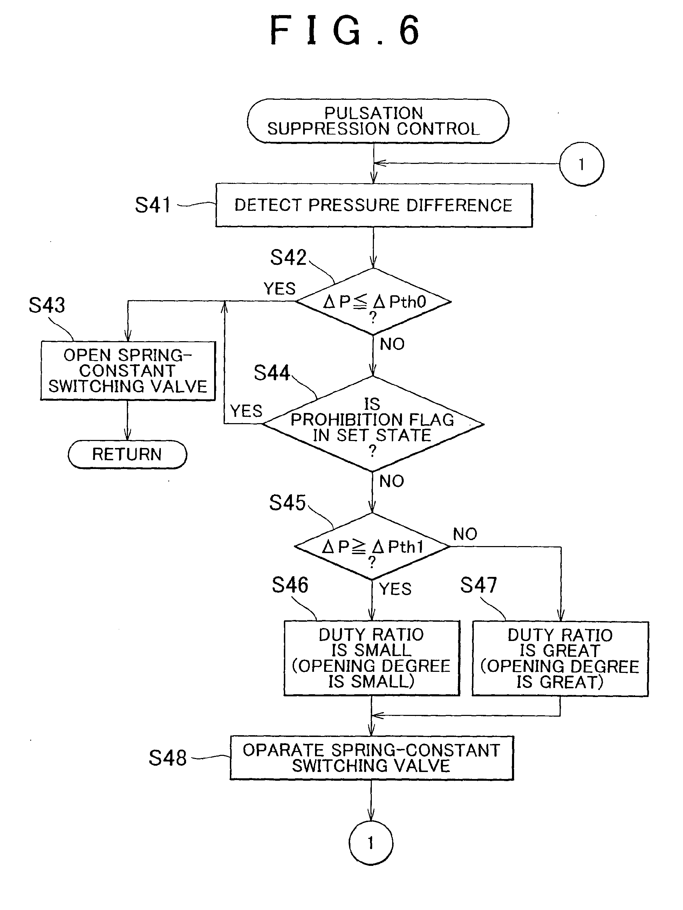

Next, a second embodiment will be described. In the second embodiment, the spring-constant switching valve 28 is controlled according to a duty ratio. FIG. 6 illustrates the flowchart of the pulsation suppression control executed in step S3 of the program shown in FIG. 3 in the second embodiment. In step S41, the fluid pressure in the low-pressure accumulator 26 and the fluid pressure in the individual passage 22 are detected, and the difference in the pressure between the low-pressure accumulator 26 and the individual passage 22 is obtained. In step S42, it is determined whether a pressure difference ΔP is equal to or less than a first predetermined value ΔPth0 that is near 0. If it is determined that the pressure difference ΔP is equal to or less than the first predetermined value ΔPth0, it is determined that no problem occurs if the spring-constant switching valve 28 is opened immediately. Therefore, in step S43, the spring-constant switching valve 28 is opened. In other words, when the pressure difference ΔP is equal to or less than the first predetermined value ΔPth0, the pulsation is not caused by opening the spring-constant switching valve 28.

If it is determined that the pressure difference ΔP is greater than the first predetermined value ΔPth0, it is determined whether a prohibition flag (described later) is in a set state in step S44. If it is determined that the prohibition flag is in the set state in step S44, the spring-constant switching valve 28 is opened immediately by stopping supply of electric current in step S43. If it is determined that the prohibition flag is not in the set state in step S44 (NO in step S44), it is determined whether the pressure difference ΔP is equal to or greater than a second predetermined value ΔPth1 in step S45.

If it is determined that the pressure difference ΔP is equal to or greater than the second predetermined value ΔPth1 (YES in step S45), the duty ratio is set to a small value (i.e., the opening degree of the spring-constant switching valve 28 is substantially reduced) in step S46. The duty ratio is a ratio of the period during which the spring-constant switching valve 28 is open to the period during which the control is executed. The duty ratio is represented by an equation, Topen/ (Topen + Tshut) where Topen is the period during which the spring-constant switching valve 28 is open, and Tshut is the period during which the spring-constant switching valve 28 is closed. If it is determined that the pressure difference ΔP is less than the second predetermined value ΔPth1 (NO in step S45), the duty ratio is set to a great value (i.e., the opening degree of the spring-constant switching valve 28 is substantially increased) in step S47. Then, in step S48, the spring-constant switching valve 28 is operated according to the set duty ratio.

When this routine is started, the pressure difference ΔP is great and the spring-constant switching valve 28 is operated according to the small duty ratio. However, if the pressure difference ΔP decreases, the spring-constant switching valve 28 is operated according to the great duty ratio. If the pressure difference ΔP decreases even further, the spring-constant switching valve 28 is opened.

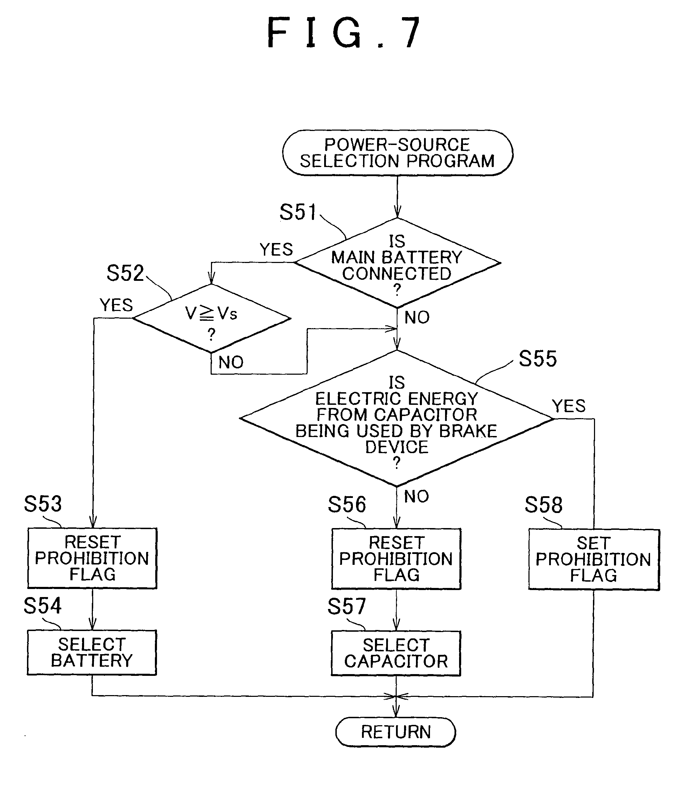

When the spring-constant switching valve 28 is controlled according to the duty ratio, electric energy is supplied from the power source selected in a power supply selection program. FIG. 7 illustrates the flowchart of the power source selection program. In step S51, it is determined whether the main battery 238 is connected to the suspension apparatus. If it is determined that the main battery 238 is connected to the suspension apparatus (YES in step S51), the power source voltage is detected, and it is determined whether the power source voltage is equal to or higher than a predetermined voltage Vs in step S52. If it is determined that the power source voltage is equal to or higher than the predetermined voltage Vs (YES in step S52), the prohibition flag is reset in step S53, and the main battery 238 is selected in step S54. That is, the power-source switching device 272 executes the control so that electric energy is supplied to the suspension apparatus from the main battery 238.

If it is determined that the main battery 238 is not connected to the suspension apparatus (NO in step S51), for example, if the main battery 238 is disconnected from the suspension apparatus for maintenance or the like, it is determined whether electric energy from the capacitor 270 is being used by the brake control actuator 262 or the like in step S55. If it is determined that the electric energy from the capacitor 270 is not being used (NO in step S55), the prohibition flag is reset in step S56, and the capacitor 270 is selected in step S57. If it is determined that the electric energy from the capacitor 270 is being used by the brake control actuator 262 or the like (YES in step S55), the prohibition flag is set in step S58. As described above, when the prohibition flag is in the set state, the spring-constant switching valve 28 is not controlled according to the duty ratio.

In this embodiment, the capacitor 270 for the brake device 266 supplies electric energy required to control the spring-constant switching valve 28. Therefore, even if the main battery 238 cannot be used, the spring-constant switching valve 28 can be controlled according to the duty ratio. Also, by using the capacitor 270 for the brake device 266, an auxiliary power source such as a capacitor does not need to be provided exclusively for the suspension apparatus. This prevents an increase in cost. However, a dedicated backup power source (auxiliary power source) such as a capacitor may be provided for the suspension apparatus.

In this embodiment, the spring-constant switching valve 28 is controlled according to the duty ratio, which prevents sudden opening of the spring-constant switching valve 28 and the pulsation. Also, the duty ratio is set according to the difference in the fluid pressure between the upstream and the downstream of the spring-constant switching valve 28. As a result, the spring-constant switching valve 28 can be opened quickly while suppressing the pulsation.

In this embodiment, the duty ratio is switched between two values. However, the duty ratio may be switched among three values, or may be continuously changed according to the pressure difference. Also, the duty ratio is not necessarily changed according to the pressure difference. The spring-constant switching valve 28 may be operated according to a predetermined duty ratio when the spring-constant switching valve 28 is opened.

Further, the spring-constant switching valve 28 may be replaced with a variable orifice or a linear control valve that can continuously change the cross sectional area through which the operating fluid flows. Also, steps S41 and S42 of the pulsation suppression control may be executed in step S2 in the program shown in FIG. 3.

Even in the case where the ignition switch 222 is turned off and the main battery 238 is electrically disconnected from the suspension apparatus, if electric current is supplied to the suspension ECU 200 from another power source so that the suspension ECU 200 can be operated, an affirmative determination is made in step S51, and step S55 and subsequent steps may be executed.

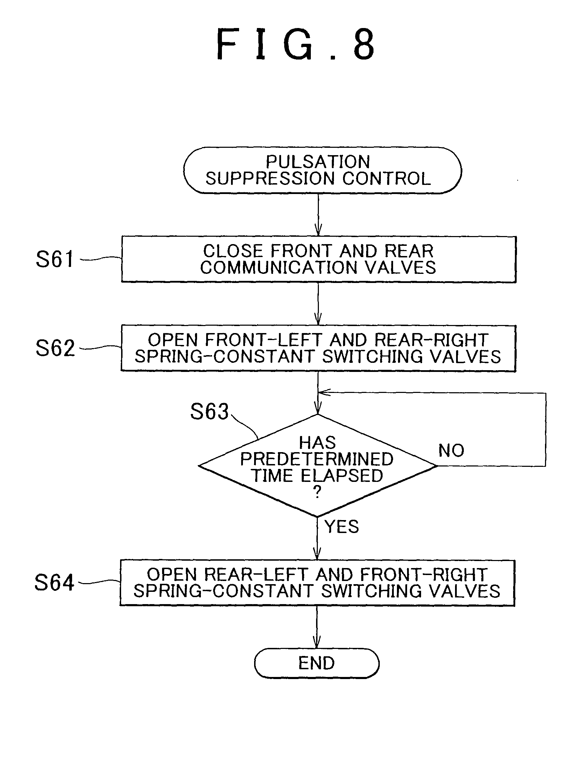

A third embodiment will be described. In the third embodiment, the pulsation is suppressed using the center cylinder 48. FIG. 8 illustrates the flowchart of the pulsation suppression control executed in step S3 of the program shown in FIG. 3 in the third embodiment. In step S61, the communication-valves 112 and 114 are closed. There may be the case where the communication-valves 112 and 114 have already been closed when step S61 is executed.

Next, in step S62, the spring-constant switching valves 28FL and 28RR for the wheels 4FL and 4RR in the diagonal positions are opened. As a result, the fluid pressure in the fourth fluid chamber 63 and the fluid pressure in the third fluid chamber 62 are changed, which moves the piston assembly 50. The pulsation caused by opening the spring-constant switching valves 28FL and 28RR is transmitted to the center cylinder 48. When the fluid pressures in the fourth fluid chamber 63 and the fluid pressure in the third fluid chamber 62 are both increased due to transmission of the pulsation, the piston assembly 50 is moved to the right side in FIG. 1. The fluid pressure in the fourth fluid chamber 63 and the fluid pressure in the third fluid chamber 62 are changed depending on the mode where the pulsation is transmitted (for example, the length of the passage connecting the spring-constant switching valve 28 to the center cylinder 48).

In step S63, it is determined whether a predetermined time has elapsed. If it is determined that the predetermined time has elapsed (YES in step S63), the spring-constant switching valves 28FR and 28RL for the wheels 4FR and 4RL in the diagonal positions are opened. When the fluid pressure in the second fluid chamber 61 and the fluid pressure in the first pressure chamber 60 are both increased, the piston assembly 50 is moved to the left side in FIG. 1. In this embodiment, the center cylinder 48 is used as a buffer device to suppress the pulsation.

The spring-constant switching valves 28 corresponding to the four wheels may be opened one by one, because the piston assembly 50 is moved if the fluid pressure in one of the four fluid chambers 60 to 63 in the center cylinder 48 is changed. In step S17 or in step S21, the instruction to open the spring-constant switching valve 28 may be output after the adjustment of the vehicle height and the control of the damping characteristic are completed (in the case where the variable orifice 30 increases the cross sectional area of the individual passage 22 through which the operating fluid flows).

A fourth embodiment will be described. In the fourth embodiment, the pulsation is suppressed by opening the closed region. The phrase "the closed region is opened" signifies that communication is permitted between the closed region and the atmosphere or a low-pressure tank such as a reservoir. Also, the spring-constant switching valve 28 is opened when the vehicle is unoccupied and there is a low likelihood that anyone is around the vehicle. In the case where opening and closing of a door is detected after the ignition switch 228 is turned off, and the door is kept closed for a predetermined period or more, it is determined that the occupant has gotten off and left the vehicle.

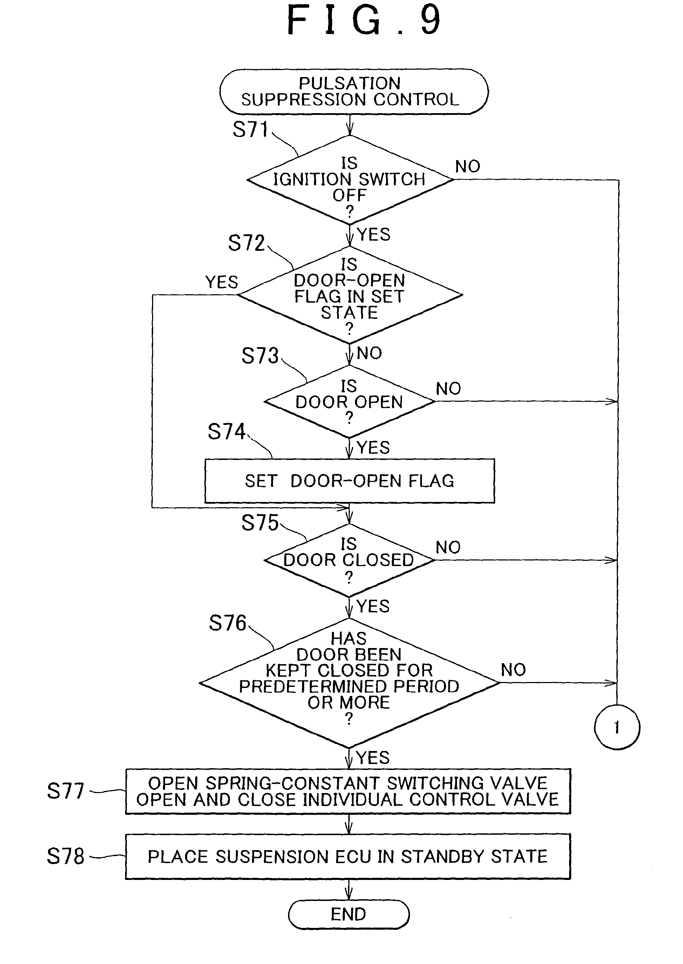

FIG. 9 illustrates the flowchart of the pulsation suppression control executed in step S3 of the program shown in FIG. 3. In step S71, it is determined whether the ignition switch 228 is OFF. Then, in step S72, it is determined whether a door-open flag is in the set state. If step S72 is executed for the first time since the start of the control, the door-open flag is usually in the reset state, and therefore a negative determination is usually made in step S72.

In step S73, it is determined whether the door is open. If it is determined that the door is open while the ignition switch 228 is OFF, the door-open flag is set in step S74. In step S75, it is determined whether the door is closed. If step S75 is executed for the first time since the start of the control, a negative determination is usually made in step S75.

If it is determined that the door-open flag is in the set state in step S72, it is determined whether closing of the door has been detected in step S75. If closing of the door has been detected (YES in step S75), it is determined whether the door has remained closed for a predetermined period or more (after the door is opened and then closed while the ignition switch 228 is OFF) in step S76. If it is determined that the door has remained closed for the predetermined period or more in step S76, it is considered that there is a low likelihood that an occupant is in or around the vehicle. Therefore, in step S77, the spring-constant switching valve 28 is opened, and the individual control valve 110 is opened for a predetermined period, and then is closed. In this case, the drain control valve 106 is open. Then, in step S78, the suspension ECU 250 is placed in the standby state.

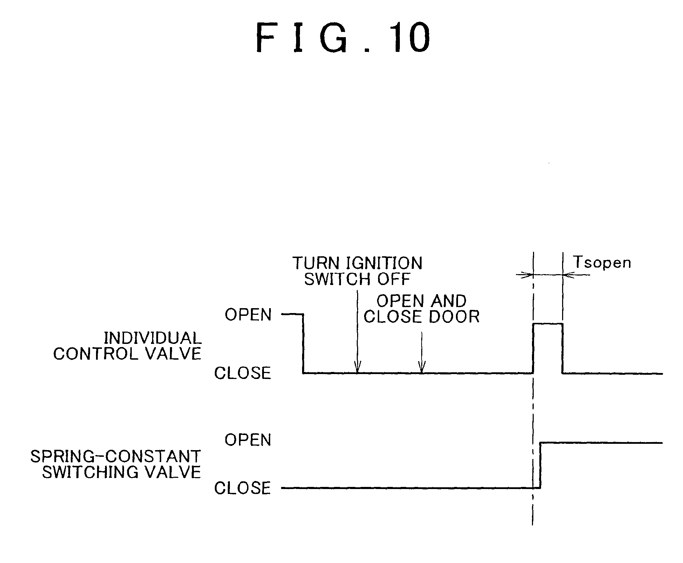

As shown in FIG. 10, when the spring-constant switching valve 28 is opened, the individual control valve 110 is opened for only a predetermined period Tsopen. If the predetermined period Tsopen is too long, a great amount of operating fluid is discharged from the accumulator 26, which makes it difficult to increase the vehicle height next time. Accordingly, the period Tsopen is set to the smallest value at which the pulsation can be suppressed. The spring-constant switching valve 28 and the individual control valve 110 may be opened simultaneously. However, by opening the individual control valve 110 earlier, the pulsation caused by opening the spring-constant switching valve 28 can be reliably suppressed.

In this embodiment, the spring-constant switching valve 28 and the individual control valve 110 corresponding to each wheel may be opened simultaneously. The spring-constant switching valves 28 and the individual control valves 110 corresponding to a plurality of wheels may be opened simultaneously. The spring-constant switching valves 28 and the individual control valves 110 corresponding to all the four wheels may be opened simultaneously.

In this embodiment, the pulsation suppression control is executed when it is determined that the occupant gets off the vehicle and leaves the vehicle after the ignition switch 228 is turned off. However, the pulsation suppression control is not necessarily executed on this condition. For example, the pulsation suppression control may be executed when it is determined that the occupant gets off the vehicle (for example, opening and closing of the door is detected) after the ignition switch 228 is turned off. Alternatively, the pulsation suppression control may be executed when a predetermined time has elapsed since the ignition switch 228 is turned off.

Next, a fifth embodiment will be described. In the fifth embodiment, the spring-constant switching valve is a spool valve where the spool is unlikely to move.

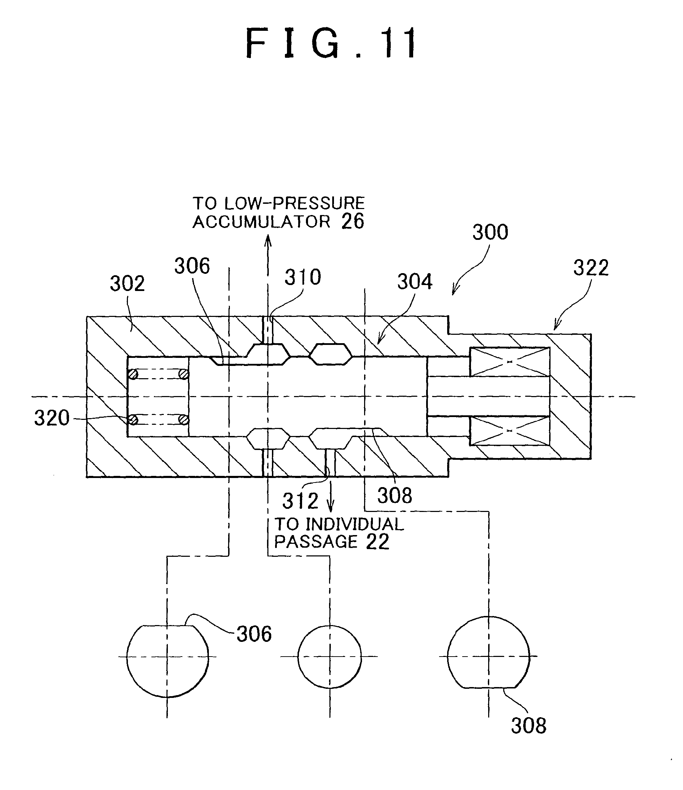

FIG. 11 illustrates a spring-constant switching valve 300, which is an example of the spool valve. The spring-constant switching valve 300 includes a body 302, and a spool 304. The spool 304 is fitted into the body 302 such that the spool 304 can slide in the axial direction. The spool 304 includes notches 306 and 308 that extend in the axial direction. In this embodiment, the cross sections orthogonal to the axis of the spool 304, of the notch 306 and the notch 308 are orientated in directions different from each other by approximately 180 degrees. The pressure-receiving area of the notch 306 is substantially equal to the pressure-receiving area of the notch 308. A port 310 is connected to the accumulator 26, and a port 312 is connected to the individual passage 22.

A spring 320 is provided at one end of the spool 304 in the axial direction. A solenoid 322 is provided at the other end of the spool 304 in the axial direction. The force of the spring 320 as it expands and the electromagnetic driving force are applied in the axial direction of the spool 304. The spool 304 is moved based on the relation of these forces.

The forces corresponding to the fluid pressures in the port 310 and the port 312 are applied in the radial direction of the spool 304. The fluid pressure in the accumulator 26 is applied to the notch 306. The fluid pressure in the individual passage 22 is applied to the notch 308. The spool 304 receives the moment equal to the sum of the moment corresponding to the fluid pressure in the accumulator 26 and the moment corresponding to the fluid pressure in the individual passage 22. This moment increases as the sum of the fluid pressure in the accumulator 26 and the fluid pressure in the individual passage 22 increases. The friction force is caused between the spool 304 and the body 302 due to the moment. This reduces movement of the spool 304 with respect to the body 302 in the axial direction. This prevents the operating fluid from flowing between the low-pressure accumulator 26 and the individual passage 22 suddenly, and suppresses the pulsation.

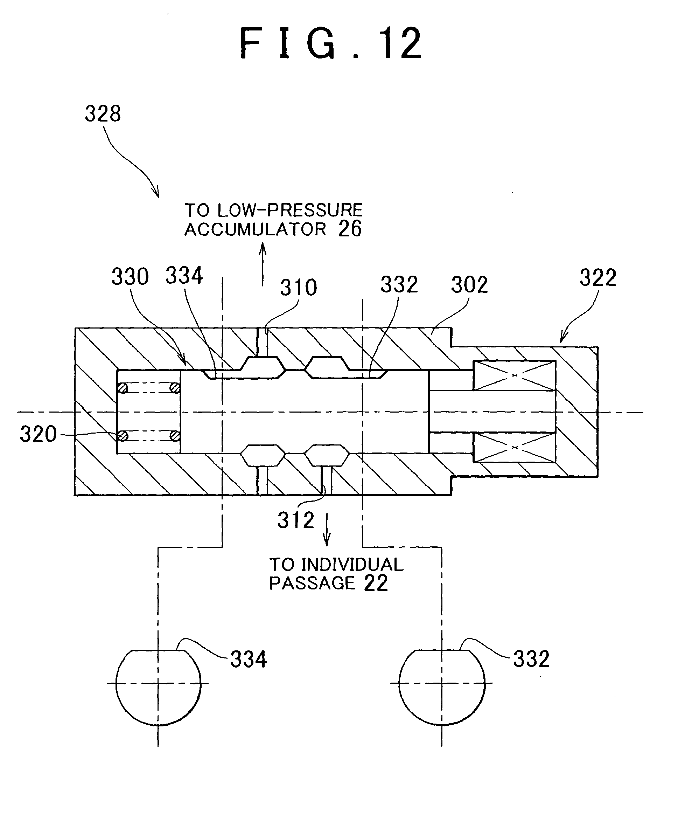

The cross sections of the two notches may be oriented in the same direction. FIG. 12 illustrates a spring-constant switching valve 328, which is an example of the spool valve where the cross sections of two notches are oriented in the same direction. In a spool 330 of the spring-constant switching valve 328, the cross sections of two notches 332 and 334 are oriented in the same direction. The pressure-receiving area of the notch 332 is substantially equal to the pressure-receiving area of the notch 334. In this case, when the fluid pressure in the accumulator 26 is equal to the fluid pressure in the individual passage 22, moment is not caused, but the force to press the spool 330 to one side is applied. The friction force is caused between the spool 330 and the body 302. This reduces movement of the spool 330. In this embodiment as well, as the sum of the fluid pressure in the accumulator 26 and the fluid pressure in the individual passage 22 increases, the force to press the spool 330 to one side increases, and movement of the spool 330 is reduced.

Although step S2 is executed in the spring-constant switching time pulsation suppression program in each of the aforementioned embodiments, step S2 is optionally executed. In a modified example of the embodiment, when the spring-constant switching valve 28 is opened, step S3 is instead executed. For example, when the vehicle, which has turned, decelerated, or accelerated, starts to run straight at a constant speed, the pulsation suppression control is executed.

In another modified example of the embodiment, the pulsation suppression control is executed only after the vehicle height is adjusted quickly. This is because when the vehicle height is adjusted quickly, the amount of change in the vehicle height is usually greater than that when the vehicle height is adjusted slowly while the vehicle is running.

Further, in another modified example of the embodiment, the pulsation suppression control is executed after the vehicle height is adjusted while the ignition switch 228 is ON. But the pulsation suppression control is not executed when the ignition switch 228 is OFF and the request to adjust the vehicle height is output from the portable device 242. This is because the vehicle is unoccupied, and therefore the pulsation suppression control does not need to be executed after the vehicle height is adjusted according to the request from the portable device 242 when the ignition switch 228 is OFF.

Next, the control to suppress the pulsation caused by operating the individual control valve 110 (hereinafter, referred to as "control-valve pulsation suppression control") will be described. The individual control valve 110 is operated when the adjustment of the vehicle height starts and when the adjustment ends.

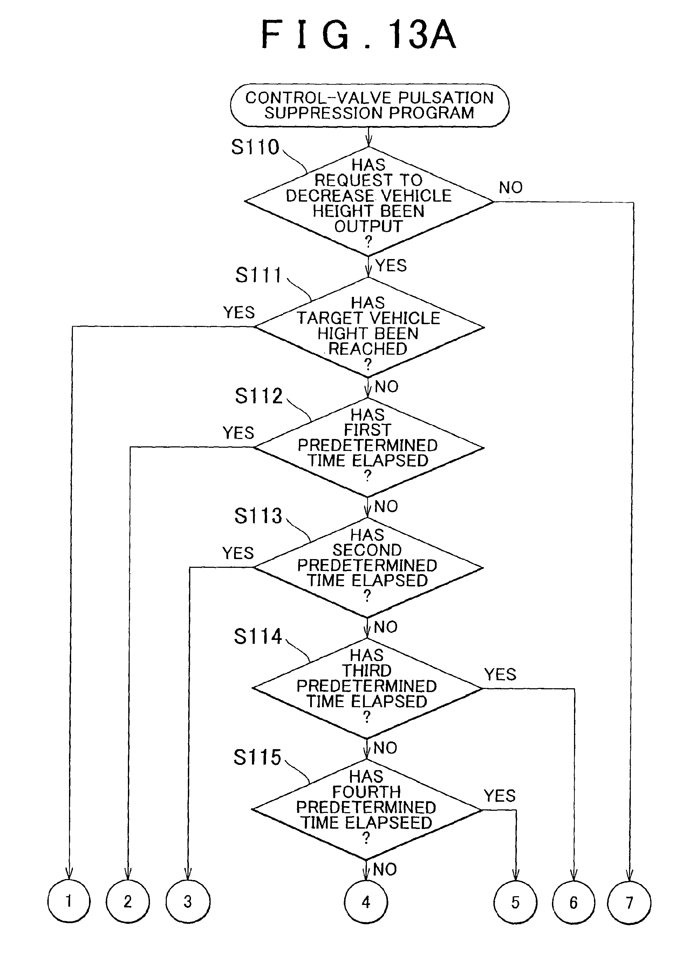

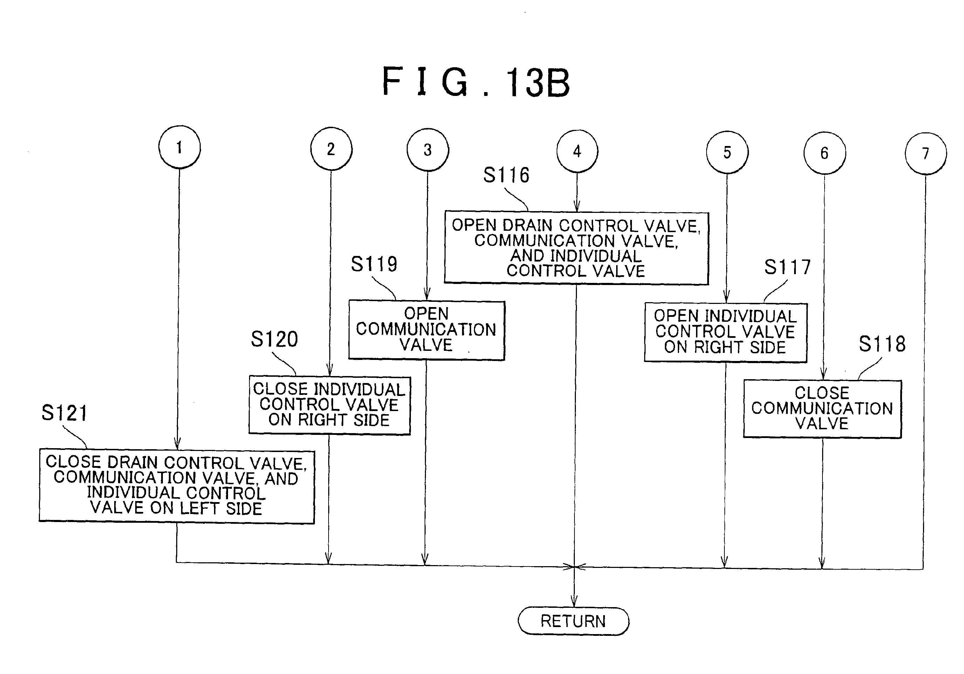

A sixth embodiment will be described. In the sixth embodiment, the communication-valves 112 and 114 are operated at the start and end of the control to decrease the vehicle height. FIG. 13A and 13B illustrate the flowcharts of an example of the control-valve pulsation suppression control. The wheel-to-body distance may be decreased with respect to the front wheels only, the rear wheels only, or it may be decreased with respect to both the front wheels and the rear wheels. In this embodiment, the wheel-to-body distance on the front-wheel side is decreased.

In step S110, it is determined whether the request to decrease the vehicle height has been output. If it is determined that the request has been output (YES in step S110), it is determined whether the actual vehicle height has reached the target vehicle height in step S111. If it is determined that the actual vehicle height has not reached the target vehicle height (NO in step S111), it is determined whether a first predetermined time has elapsed in step S 112, it is determined whether a second predetermined time has elapsed in step S 113, it is determined whether a third predetermined time has elapsed in step S 114, and it is determined whether a fourth predetermined time has elapsed in step S115.

Before the fourth predetermined time elapses, the drain control.valve 106, the communication-valve 112, and the control valve 110FL, which corresponds to the front-left wheel, are opened in step S 116. As a result, the operating fluid flows from the two suspension cylinders 10FL and 10FR via the one control valve 110FL. This reduces the flow amount of operating fluid flowing from the suspension cylinders 10FL and 10FR. This mode will be referred to as "first mode".

Next, when the fourth predetermined time has elapsed, the control valve 110FR is opened in step S 117. The operating fluid flows from the suspension cylinder 10FR mainly via the control valve 110FR. However, because the communication-valve 112 is kept open, the operating fluid will also continue to flow via the communication-valve 112. This mode will be referred to as "second mode". In this mode, a change in the flow of the operating fluid is suppressed. If the second mode is maintained for a predetermined period, the flow amount of operating fluid that flows via the communication-valve 112 is reduced to an extremely small value. Therefore, the flow of the operating fluid via the communication-valve 112 is substantially stopped without closing the communication-valve 112.

When the third predetermined time has elapsed, the communication-valve 112 is closed in step S118. The operating fluid flows from the suspension cylinder 10FL via the control valve 110FL. Also, the operating fluid flows from the suspension cylinder 10FR via the control valve 110FR. This mode will be referred to as "third mode". In the third mode, the greatest amount of operating fluid flows.

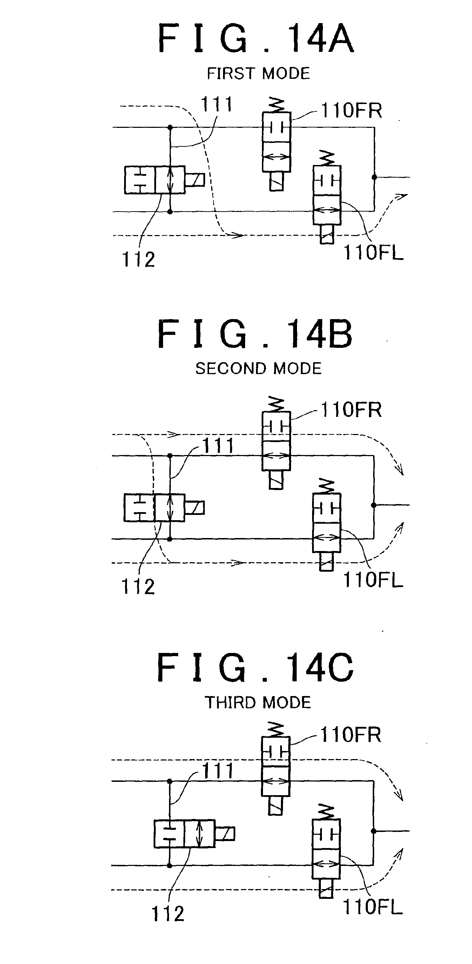

That is, when the control to decrease the vehicle height is started, the communication-valve 112, and the individual control valves 110FL and 110FR are operated as shown in FIGS. 14A, 14B, and 14C. In other words, the first mode, the second mode, and the third mode are selected in the stated order.

In the first mode, the operating fluid flows from the two suspension cylinders 10FL and 10FR toward the reservoir 78 via the (one) control valve 110FL. The pulsation is caused in the control valve 110FL, but the pulsation is not caused in the control valve 110FR. As a result, the pulsation can be suppressed as compared to the case where the individual control valves 110FL and 110FR are both opened immediately when the control to decrease the vehicle height is started. Also, the maximum cross sectional area of the control valve 110FL is fixed, and the operating fluid flows from the suspension cylinder 10FR also via the communication-valve 112. Therefore, in the first mode, the flow amount of operating fluid that flows through the control valve 10FL is less than the sum of the flow amounts of operating fluid that would flow through the individual control valves 110FL and 110FR if the individual control valves 110FL and 110FR are both open. This also suppresses the pulsation.

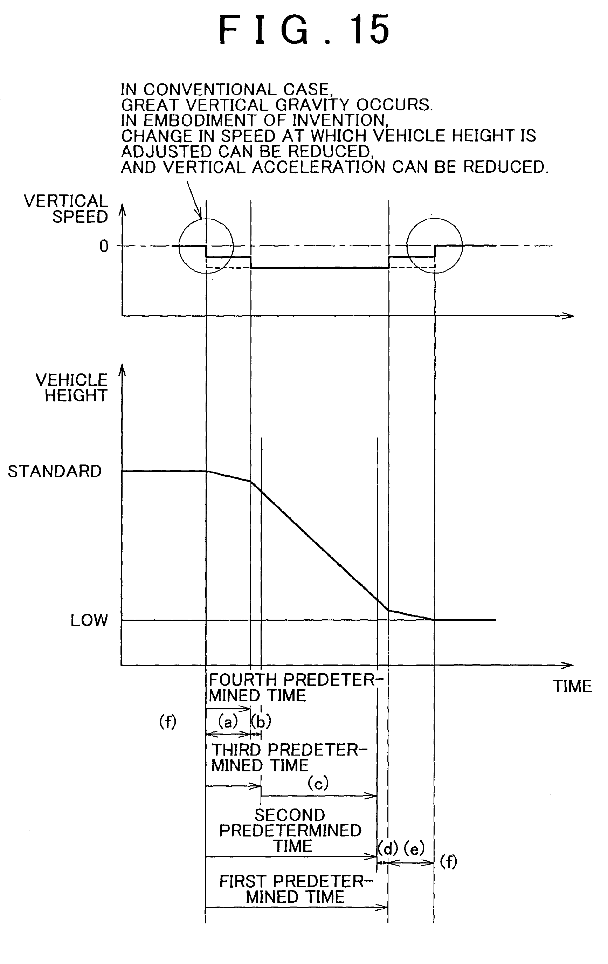

This also prevents a sharp increase in the flow amount of operating fluid flowing from the suspension cylinders 10FL and 10FR, and a sharp change in the speed at which the vehicle height is decreased when the control to decrease the vehicle height is executed, as shown in FIG. 15. As a result, the vertical acceleration can be reduced. Further, when the third predetermined time has elapsed, the greatest amount of operating fluid flows in the third mode. Therefore, the vehicle height can be decreased promptly. That is, when the control to decrease the vehicle height is started, the pulsation caused by operating the individual control valves can be suppressed and the vertical acceleration can be reduced, which reduces the time required for the actual vehicle height to reach the target vehicle height. Also, because the second mode is selected after the first mode is selected, the pulsation caused by operating the communication-valve 112 can be suppressed.

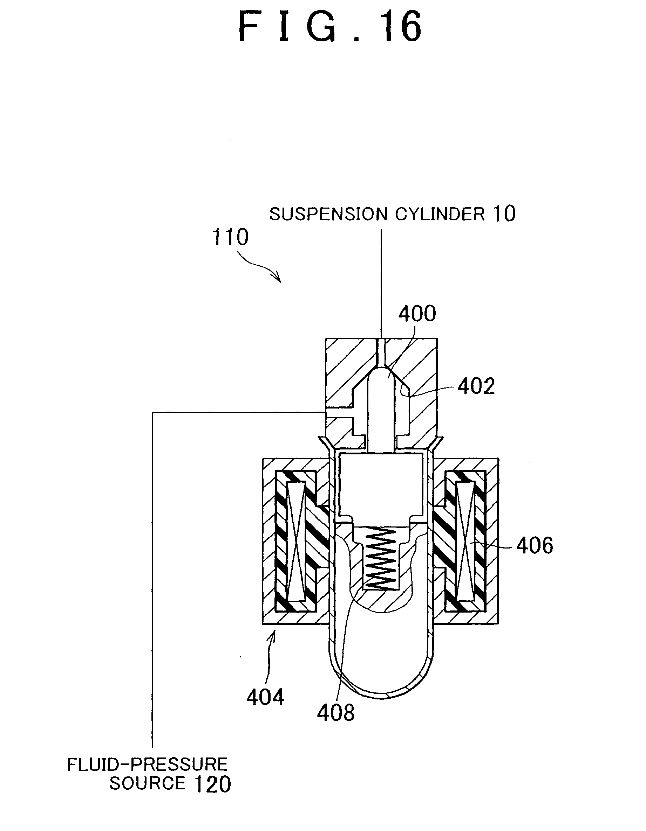

As shown in FIG. 16, the individual control valve 110 is a seating valve that includes a valve element 400 and a valve seat 402. Also, the individual control valve 110 is a normally-closed electromagnetic valve that is opened and closed by supplying electric current to a coil 406 of a solenoid 404 and stopping supply of the electric current to the coil 406. When a predetermined amount of electric current is supplied to the coil 406, the individual control valve 400 is separated from the valve seat 402 against the urging force of a spring 408. The cross sectional area of the individual control valve 110 through which the operating fluid flows varies depending on the distance between the valve element 400 and the valve seat 402. When the cross sectional area is reduced, the pulsation can be suppressed. However, by reducing the cross sectional area of the valve opening, the time required to adjust the vehicle height is increased. In contrast, in this embodiment, the individual control valves 110FL and 110FR, and the communication-valve 112 are operated in the aforementioned manner. Therefore, the individual control valve 110 can be designed such that the cross sectional area through which the operating fluid flows is increased. This reduces the time required to adjust the vehicle height, and the pulsation.

Before the control to decrease the vehicle height is completed, the individual control valves 110FL and 110FR, and the communication-valve 112 are operated in the reverse order. After the second predetermined time has elapsed, the communication-valve 112 is opened in step S 119. When the first predetermined time has elapsed, the control valve 110FR is closed in step S120. When the actual vehicle height has reached the target vehicle height, the control valve 110FL, the communication-valve 112, and the drain control valve 106 are closed in step S121. The control to decrease the vehicle height is completed in this manner.

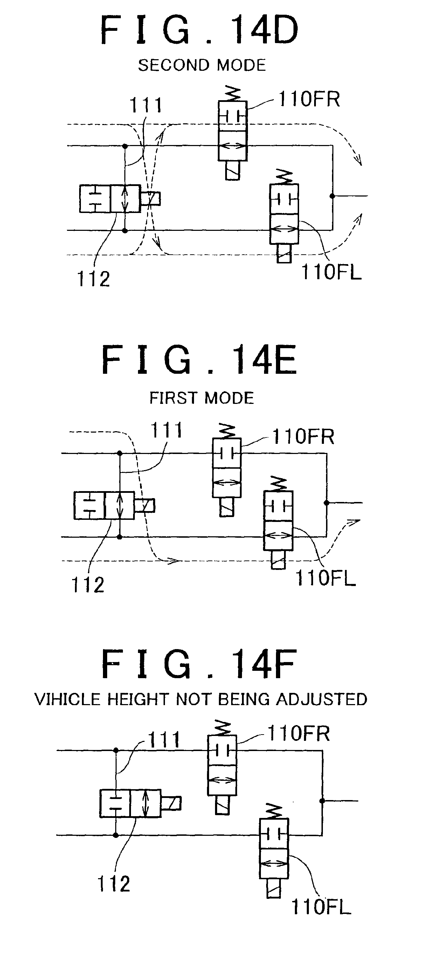

In this case, as shown in FIGS. 14D, 14E, 14F, the communication-valve 112, and the individual control valves 110FL and 110FR are operated. That is, the second mode and the first mode are selected in the order stated. This suppresses the change in the flow amount of operating fluid, and suppresses the pulsation caused by closing the individual control valves 110FL and 110FR. This also suppresses the change in the speed at which the vehicle height is decreased, and suppresses the pulsation when the control to decrease the vehicle height is completed, as shown in FIG. 15.

The first to fourth predetermined times are set such that the aforementioned effects can be obtained. The first and fourth predetermined times are set such that the flow amount of operating fluid can be reduced when the vehicle height adjustment starts and when the adjustment ends. The time interval equivalent to the difference between the third predetermined time and the fourth predetermined time is set as the time required for the operating fluid to substantially stop flowing via the communication-valve 112. Also, the time interval equivalent to the difference between the first predetermined time and the second predetermined time is set as the time required for the operating fluid to substantially stop flowing via the communication-valve 112. The time interval equivalent to the difference between the second predetermined time and the third predetermined time is set so that the time required to adjust the vehicle height can be reduced. That is, the first to fourth predetermined times are set according to the time required to adjust the vehicle height, which is estimated based on the actual vehicle height, the target vehicle height, and the like when the vehicle height adjustment starts.

In FIG. 15, the speed at which the vehicle height changes when the adjustment starts is equal to that when the adjustment ends, for the sake of simplicity. However, in fact, the speed at which the vehicle height changes when the adjustment starts is higher than that when the adjustment ends.

In the aforementioned embodiment, the pulsation that occurs when the adjustment of the vehicle height starts and ends can be suppressed. However, the pulsation may also be selectively suppressed only at the start or at the end of the adjustment.

Also, the second mode is not necessarily selected, as long as the first mode and the third mode are selected. In the case where the second mode is not selected, steps S 115, S117, S113, and S 119 are not executed.

In the aforementioned embodiment, the individual control valves 110 and the communication-valve 112 are operated based on time. However, the individual control valves 110 and the communication-valve 112 may be operated based on the amount by which the vehicle height is decreased. In this case, when the amount has reached a fourth predetermined amount, the control valve 110FR is opened; when the amount has reached a third predetermined amount, the communication-valve 112 is closed; when the amount has reached a second predetermined amount, the communication-valve 112 is opened; and when the amount has reached a first predetermined amount, the control valve 110FR is closed. The first to fourth predetermined amount can be set in the same manner as the first to fourth predetermined time are set.

Also, the aforementioned control can be executed not only when the vehicle height is decreased, but also when the vehicle height is increased.

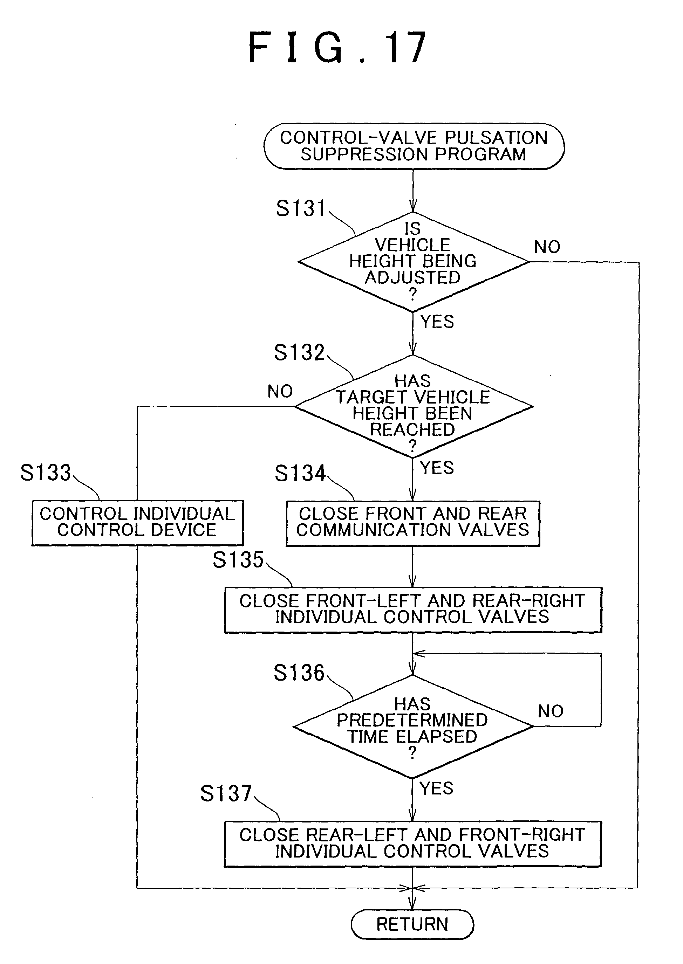

A seventh embodiment will be described. In this embodiment, the center cylinder 48 is used to suppress the pulsation. FIG. 17 illustrates the flowchart of a control-valve pulsation-suppression program in the seventh embodiment. This program is executed at predetermined time intervals.

In this embodiment, the pulsation suppression control is executed when the adjustment of the vehicle height ends. During the adjustment, the operating fluid flows between the suspension cylinder 10 and the fluid-pressure source 120. When the individual control valve 110 is closed upon completion of the adjustment, the flow of the operating fluid stops, which causes the pulsation due to inertia of the operating fluid. The pulsation suppression control may be executed when the control to decrease the vehicle height is completed, or when the control to increase the vehicle height is completed.

In step S 131, it is determined whether the vehicle height is being adjusted. If it is determined that the vehicle height is being adjusted (YES in step S131), it is determined whether the vehicle height has reached the target vehicle height in step S132. If it is determined that the vehicle height has not reached the target vehicle height (NO in step S132), the individual control valve device 80 and the like are controlled in step S133.

If the actual vehicle height has reached the target vehicle height (YES in step S132), the pulsation suppression control is executed in step S134 and subsequent steps. In step S 134, the communication-valves 112 and 114 are closed, and in step S 135, the individual control valves 110FL and 110RR, which correspond to the wheels 4FL and 4RR in the diagonal positions, are closed. The pulsation caused by closing the individual control valves 110FL and 110RR is transmitted, which changes the fluid pressures in the fourth chamber 63 and the third chamber 62. As a result, the piston assembly 50 is moved, which suppresses the pulsation.

If the fluid pressure in the fourth chamber 63 and the fluid pressure in the third chamber 62 decrease due to transmission of the pulsation caused by closing the individual control valves 110FL and 110RR when the control to increase the vehicle height is completed, the piston assembly 50 is moved to the left side in FIG. 1. If the fluid pressure in the fourth chamber 63 and the fluid pressure in the third chamber 62 increase due to transmission of the pulsation when the control to decrease the vehicle height is completed, the piston assembly 50 is moved to the right side in FIG. 1.

In step S 136, it is determined whether a predetermined time has elapsed. If it is determined that the predetermined time has elapsed (YES in step S136), the individual control valves 110FR and 110RL corresponding to the wheels in the diagonal positions are closed in step S 137. As a result, the piston assembly 50 is moved, which suppresses the pulsation.

The individual control valves 110 may be closed individually in a predetermined order. Also, at least two of the aforementioned embodiments may be combined.

Further, the structure of the suspension apparatus is not limited to the structures in the aforementioned embodiments. For example, the center cylinder 48, and the accumulators 24 and 26 are not necessarily provided. The invention is not limited to suspension apparatus that execute both of the control to adjust the vehicle height and the control to change the spring-constant. The invention may also be applied to suspension apparatuses that execute one of these controls.

Further, the invention may also be applied to a suspension apparatus where air or gas is used as the operating fluid.

## Claims

1. A suspension apparatus including a fluid cylinder provided between a wheel-holding device (6) that holds a wheel (4) of a vehicle and a vehicle body (8); and at least one of a first controller that includes (a) an accumulator (26) connected to the fluid cylinder (10), and (b) an electromagnetic control valve (28) provided between the accumulator (26) and the fluid cylinder (10); and a second controller that includes (a) a fluid source (120) that includes a high-pressure source (76) and a low-pressure source (78), and (b) an electromagnetic control valve (110, 112, 114), provided between the fluid source (120) and the fluid cylinder (10), which controls a flow of fluid between the fluid cylinder (10) and the fluid source (120), **characterized by** further comprising:
a third controller that suppresses pulsation of the fluid caused by operating the electromagnetic control valve included in at least one of the first controller and the second controller.

2. The suspension apparatus according to claim 1, **characterized in that** the suspension apparatus includes the first controller, and the electromagnetic control valve included in the first controller is a spring-constant switching valve (28); and wherein the third controller suppresses the pulsation of the fluid caused by operating the spring-constant switching valve (28).

3. The suspension apparatus according to claim 2, **characterized in that** the fluid cylinder (10) includes a left fluid cylinder (10FL, 10RL) and a right fluid cylinder (10FR, 10RR) that are provided for at least one of a pair of front wheels (4FL, 4FR) and a pair of rear wheels (4RL, 4RR); the spring-constant switching valve (28) includes a left spring-constant switching valve (28FL, 28RL) that is provided between the left fluid cylinder (10FL, 10RL) and the corresponding accumulator (26), and a right spring-constant switching valve (28FR, 28RR) that is provided between the right fluid cylinder (10FR, 10RR) and the corresponding accumulator (26); the suspension apparatus includes a communication-valve (112, 114) that regulates communication between the left fluid cylinder (10FL, 10RL) and the right fluid cylinder (10FR, 10RR); and the third controller sequentially opens the left spring-constant switching valve (28FL, 28RL) and the right spring-constant switching valve (28FR, 28RR) while the communication-valve (112, 114) permits communication between the left fluid cylinder (10FL, 10RL) and the right fluid cylinder (10FR, 10RR).

4. The suspension apparatus according to claim 2 or 3, **characterized in that** the fluid cylinder (10) is provided for each of a front-left wheel (4FL), a front-right wheel (4FR), a rear-left wheel (4RL), and a rear-right wheel (4RR); the spring-constant switching valve (28) is provided between each of the fluid cylinders (10) and the corresponding accumulator (26); the suspension apparatus includes a center cylinder (48) that is operated based on a relation among fluid pressures in the fluid cylinders (10) corresponding to the front-left wheel (4FL), the front-right wheel (4FR), the rear-left wheel (4RL), and the rear-right wheel (4RR); and the third controller opens at least one of the spring-constant switching valves (28) such that the center cylinder (48) is operated.

5. The suspension apparatus according to any one of claims 2 through 4, **characterized in that** the spring-constant switching valve is an electromagnetic valve that is opened and closed by supplying electric current to a solenoid and stopping supply of the electric current to the solenoid; and the third controller controls the electric current supplied to the electromagnetic valve (28) according to a duty ratio.

6. The suspension apparatus according to any one of claims 2 through 5, **characterized in that** the suspension apparatus includes the second controller; the electromagnetic control valve provided between the fluid cylinder (10) and the fluid source (120) is a flow control valve (110) that controls a flow of the fluid to and from the fluid cylinder (10); and the third controller opens the flow control valve (110) when the spring-constant switching valve (28) is operated.

7. The suspension apparatus according to any one of claims 2 through 6, **characterized in that** the third controller opens the spring-constant switching valve (28) after a main switch of a vehicle is turned off.

8. The suspension apparatus according to any one of claims 2 through 7, **characterized in that** the spring-constant switching valve (28) is a spool valve that includes a housing that extends in an axial direction, and a spool (304) that is fitted into the housing such that the spool (304) is slidable; the spool valve regulates communication between the fluid cylinder (10) and the accumulator (26) by moving the spool (304); and the third controller reduces movement of the spool (304) with respect to the housing as a sum of the fluid pressure in the fluid cylinder (10) and the fluid pressure in the accumulator (26) increases.

9. The suspension apparatus according to any one of claims 1 through 8, **characterized in that** the suspension apparatus includes the second controller; the electromagnetic control valve included in the second controller is a flow control valve (110) that controls a flow of the fluid to and from the fluid cylinder (10); and the third controller suppresses the pulsation of the fluid caused by operating the flow control valve (110).

10. The suspension apparatus according to claim 9, **characterized in that** the third controller suppresses the pulsation in at least one of a case where adjustment of a vehicle height starts and a case where the adjustment ends.

11. The suspension apparatus according to claim 9 or 10, **characterized in that** the fluid cylinder (10) includes a left fluid cylinder (10FL, 10RL) and a right fluid cylinder (10FR, 10RR) that are provided for at least one of a pair of front wheels (4FL, 4FR) and a pair of rear wheels (4RL, 4RR); the flow control valve (110) includes a left flow control valve (110FL, 110RL) that is provided between the left fluid cylinder (10FL, 10RL) and the corresponding fluid source (120), and a right flow control valve (110FR, 110RR) that is provided between the right fluid cylinder (10FR, 10RR) and the corresponding fluid source (120); the suspension apparatus includes a communication-valve (112, 114) that regulates communication between the left fluid cylinder (10FL, 10RL) and the right fluid cylinder (10FR, 10RR); and the third controller selects a first mode where one of the left flow control valve (110FL, 110RL) and the right flow control valve (110FR, 110RR) is open and the other flow control valve is closed, and the communication-valve (112, 114) is open to suppress a flow amount of the fluid when a vehicle height is adjusted.

12. The suspension apparatus according to claim 11, **characterized in that** the third controller selects a second mode where the communication-valve (112, 114) is open and both of the left flow control valve (110FL, 110RL) and the right flow control valve (110FR, 110RR) are open to suppress a change in the flow of the fluid after the first mode is selected, and selects a third mode where both of the left flow control valve (110FL, 110RL) and the right flow control valve (110FR, 110RR) are open and the communication-valve (112, 114) is closed to permit a greatest amount of fluid to flow after the second mode is selected, when the vehicle height is adjusted.

13. The suspension apparatus according to any one of claims 9 through 12, **characterized in that** the fluid cylinder (10) is provided for each of a front-left wheel, a front-right wheel, a rear-left wheel, and a rear-right wheel; the flow control valve (110) is provided between each of the fluid cylinders (10) and the fluid source (120); the suspension apparatus includes a center cylinder (48) that is operated based on a relation among fluid pressures in the fluid cylinders (10) corresponding to the front-left wheel, the front-right wheel, the rear-left wheel, and the rear-right wheel; and the third controller operates at least one of the flow control valves (110) such that the center cylinder (48) is operated.

14. A deceleration control apparatus for a vehicle that includes the suspension apparatus according to any one of claims 1 through 13, **characterized in that** a solenoid of the electromagnetic control valve (28, 106, 110, 112, 114) is connected to a backup power source (270) included in a brake device (274) for the vehicle.
